(19) Europäisches Patentamt
European Patent Office
Office européen des brevets

(11) **EP 2 862 240 B1**

(12) **EUROPÄISCHE PATENTSCHRIFT**

(45) Veröffentlichungstag und Bekanntmachung des Hinweises auf die Patenterteilung:
**06.04.2016 Patentblatt 2016/14**

(21) Anmeldenummer: **13730101.6**

(22) Anmeldetag: **24.05.2013**

(51) Int Cl.:
*H01R 13/6473* *(2011.01)*    *H01R 12/72* *(2011.01)*

(86) Internationale Anmeldenummer:
**PCT/EP2013/001546**

(87) Internationale Veröffentlichungsnummer:
**WO 2013/185882 (19.12.2013 Gazette 2013/51)**

(54) **VERBINDER UND KONTAKTSYSTEM**

CONNECTOR AND CONTACTING SYSTEM

CONNECTEUR ET SYSTÈME DE CONTACT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.06.2012 DE 102012011895**

(43) Veröffentlichungstag der Anmeldung:
**22.04.2015 Patentblatt 2015/17**

(73) Patentinhaber: **Yamaichi Electronics Deutschland GmbH**
**85609 Aschheim-Dornach (DE)**

(72) Erfinder:
• **MICHEL, Dirk**
**85716 Unterschleißheim (DE)**

• **HACKBARTH, Daniel**
**81825 München (DE)**
• **VALSAMAKIS, Savvas**
**85521 Ottobrunn (DE)**

(74) Vertreter: **Müller-Boré & Partner Patentanwälte PartG mbB Friedenheimer Brücke 21 80639 München (DE)**

(56) Entgegenhaltungen:
EP-A1- 1 791 220    EP-A2- 1 531 527
WO-A2-01/93375    DE-U1-202012 005 873
US-B1- 7 335 032

**Beschreibung**

Die vorliegende Erfindung betrifft einen Verbinder und ein Kontaktsystem.

In vielen komplexen elektrischen bzw. elektronischen Geräten werden Module bzw. Leiterplatten verwendet, welche austauschbar mit einer Trägerleiterplatte verbunden sind. Die Module bzw. Leiterplatten können Speicher, Prozessoren oder sonstige Komponenten aufweisen, welche durch die modulare Bauweise leicht auszutauschen sind, beispielsweise zum Austausch defekter Module oder zum Aufrüsten auf Module mit leistungsfähigerer Elektronik.

Insbesondere werden das Modul bzw. die Leiterplatte und die Trägerleiterplatte mittels eines Verbinders lösbar miteinander verbunden. Über diesen Verbinder werden daher auch elektrische Signale übertragen, welche der Kommunikation zwischen der Leiterplatte und der Trägerleiterplatte und gegebenenfalls weiterer externer Komponenten, beispielsweise Massenspeicher oder Netzwerkgeräte, dienen. Aufgrund der hohen Datenraten, welche in verschiedenen Kommunikations- bzw. Schnittstellenstandards definiert sind, betragen die über den Verbinder zu übertragenden Frequenzen der elektrischen Signale mehr als 10 GHz, teilweise mehr als 15 GHz. Herkömmliche Verbinder sind für diese neuen Standards nicht mehr geeignet, da sie bei diesen hohen Frequenzen eine zu hohe Dämpfung und ein zu großes Übersprechen zwischen den einzelnen Kontakten aufweisen.

WO 01/93375 A2 offenbart einen Verbinder für eine Leiterplatte mit einer Kante und einer Vielzahl von Kontaktstellen in der Nähe der Kante. Der Verbinder umfaßt ein Gehäuse mit einem länglichen Einschub zur Aufnahme der Kante der Leiterplatte. Eine Vielzahl von Anschlüssen ist in Anschlußhohlräumen in der Nähe des Einschubs eingeführt. Zumindest einige der Kontaktstellen weisen jeweils einen Kontaktabschnitt auf, der sich in den Einschub erstreckt, um mit einem Kontaktpad auf der Leiterplatte in Eingriff gebracht zu werden. Ein dünner flexibler Kontaktarm erstreckt sich zwischen einem Körperabschnitt und dem Kontaktabschnitt. Ein Fingerabschnitt erstreckt sich entlang des dünnen flexiblen Kontaktarms, um die Kapazität der Kontaktstelle zu erhöhen und damit die Induktivität der Schaltung durch die Kontaktstelle zu reduzieren.

Es ist daher eine Aufgabe der vorliegenden Erfindung, einen Verbinder bzw. ein Kontaktsystem bereitzustellen, um lösbare elektrische Verbindungen zu ermöglichen, welche bei einfacher Anwendung eine verbesserte Verbindungssicherheit und höhere Übertragungsraten aufweisen.

Die Aufgabe wird durch einen Verbinder gemäß Anspruch 1 und ein Kontaktsystem gemäß Anspruch 10 gelöst. Bevorzugte Ausführungsformen sind Gegenstand der abhängigen Ansprüche.

Verbinder gemäß einem Aspekt

Ein Aspekt der vorliegenden Erfindung betrifft einen Verbinder zur Aufnahme zumindest eines flachen Endbereichs einer Leiterplatte oder eines flachen Endbereichs eines Kabels umfassend:

- einen Einführöffnungsabschnitt, welcher derart ausgelegt ist, daß zumindest ein Teilbereich des flachen Endbereichs entlang einer Einführrichtung E in ein Inneres des Verbinders einführbar ist;
- zumindest ein erstes Unterkontaktelement, welches ausgelegt ist, mit zumindest einem zugeordneten ersten elektrischen Leiter auf einer Unterseite des flachen Endbereichs elektrisch zu kontaktieren und
- zumindest ein zweites Unterkontaktelement, welches ausgelegt ist, mit zumindest einem zugeordneten zweiten elektrischen Leiter auf der Unterseite des flachen Endbereichs elektrisch zu kontaktieren,

wobei das erste Unterkontaktelement von dem zweiten Unterkontaktelement entlang einer Längsrichtung L, die rechtwinklig zur Einführrichtung E orientiert ist, beabstandet angeordnet ist,

wobei das erste Unterkontaktelement von dem zweiten Unterkontaktelement verschieden ist und

wobei die Einführrichtung E und eine Höhenrichtung H, die senkrecht zur Einführrichtung E und senkrecht zur Längsrichtung L orientiert ist, eine Schnittebene E-H definieren, so daß das erste Unterkontaktelement innerhalb der Schnittebene E-H nicht kongruent zu dem zweiten Unterkontaktelement ist.

Vorteilhafterweise ist die zwischen benachbarten verschiedenen, das heißt nicht identisch geformten, ersten und zweiten Unterkontaktelementen ausgebildete elektrische Kapazität geringer im Vergleich zu zwei benachbarten identischen Unterkontaktelementen. Dadurch kann der erfindungsgemäße Verbinder vorteilhafterweise elektrische Signale mit einer höheren Frequenz übertragen als ein entsprechend aufgebauter Verbinder aus dem Stand der Technik. Weiter vorteilhafterweise ist der Verbinder einfach aufgebaut im Vergleich zu Verbindern anderer Bauart, welche heute benutzt werden, um hochfrequente elektrische Signale mit Frequenzen größer als 2 GHz oder größer als 5 GHz, insbesondere größer als 10 GHz oder größer als 15 GHz, zu übertragen. Daher kann der erfindungsgemäße Verbinder insbesondere ausgelegt sein, Daten gemäß der Standards USB 3.0 oder PCI Express 2.0 oder SATA-6 zu übertragen.

Der Verbinder ist ausgelegt, zumindest einen Teilbereich bzw. einen flachen Endbereich der Leiterplatte aufzunehmen, beispielsweise einen mit elektrischen Leitern versehenen Endbereich der Leiterplatte. Die Leiterplatte weist dabei zwei gegenüberliegende Seiten auf, welche als Unterseite und Oberseite bezeichnet werden können. Die Unterseite und die Oberseite der Leiterplatte können jeweils eine gedruckte Schaltung aufweisen, die insbesondere weitere elektronische Bauteile umfassen kann, wie beispielsweise Prozessoren, Speicherbausteine, integrierte Schaltkreise, aktive und passive elektronische Bauteile und so weiter. Jede der gedruckten Schaltungen kann kontaktierbare elektrische Leiter aufweisen, beispielsweise in Form von Kontakten oder Kontaktpads, die bevorzugt vergoldet sein können.

Die elektrischen Leiter der Leiterplatte sind bevorzugt innerhalb des flachen Endbereiches der Leiterplatte kontaktierbar. In diesem Zusammenhang bedeutet der Begriff "flacher Endbereich", daß keine abstehenden Bauteile in diesem Bereich auf der Leiterplatte angeordnet sind, sondern lediglich die gedruckten elektrischen Leiter. Weist lediglich eine Seite der Leiterplatte eine gedruckte Schaltung mit kontaktierbaren, elektrischen Leitern auf, so wird diese Seite der Leiterplatte als Unterseite definiert.

Statt einer Leiterplatte kann der Verbinder auch mit einem flachen Endbereich eines Kabels kontaktiert werden. Der Begriff "flacher Endbereich" eines Kabels, wie er im Sinne dieser Anmeldung verwendet wird, beschreibt im wesentlichen eine Anordnung der Leiter des Kabels in einem Bereich nahe einem Ende des Kabels. Insbesondere sind die Leiter im flachen Endbereich des Kabels im wesentlichen parallel angeordnet, wobei die Leiter im flachen Endbereich beispielsweise im wesentlichen parallel zu einer gemeinsamen Ebene angeordnet sind bzw. in einer gemeinsamen Ebene angeordnet sind. Insbesondere kann der flache Endbereich ein Versteifungselement umfassen, welches das Einführen in den Verbinder erleichtert. Der Verbinder kann dann mit den elektrischen Leitern des Kabel unmittelbar oder mittelbar über Kontakte auf dem Versteifungselement elektrisch kontaktieren, welche wiederum entsprechend mit den elektrischen Leitern des Kabels kontaktiert sind.

Die Leiterplatte oder das flache Kabelende kann zum Kontaktieren mit dem Verbinder entlang der Einführrichtung E in den Einführöffnungsabschnitt des Verbinders eingeführt werden. Insbesondere weist der Einführöffnungsabschnitt eine Gestalt mit einer langen Seite bzw. Längsseite entlang der Längsrichtung L und einer kurzen Seite entlang der Höhenrichtung H auf. Der Begriff "Längsseite", wie er im Sinne dieser Anmeldung verwendet wird, beschreibt eine Seite des Einführöffnungsabschnitts, welche zumindest um den Faktor 2, bevorzugt um den Faktor 4, den Faktor 8, den Faktor 10, den Faktor 15, den Faktor 20, den Faktor 50, usw. länger ist als die kurze Seite. Die Längsseite kann auch als "breite Seite" bzw. "Breite" des Einführöffnungsabschnitts bezeichnet werden. Der Einführöffnungsabschnitt kann beispielsweise eine im wesentlichen rechteckige Öffnung aufweisen, wobei eine Seite der rechteckigen Öffnung länger ist als die andere.

Durch das Einführen kann eine Kontaktierungsposition der Leiterplatte relativ zum Verbinder erreicht werden. In der Kontaktierungsposition ist ein elektrischer bzw. mechanischer Kontakt zwischen zumindest einem ersten elektrischen Unterkontaktelement und einem zugeordneten ersten elektrischen Leiter auf der Unterseite der Leiterplatte und zwischen zumindest einem zweiten elektrischen Unterkontaktelement und einem zugeordneten zweiten elektrischen Leiter auf der Unterseite der Leiterplatte hergestellt.

Weiter können in der Kontaktierungsposition die Leiterplatte oder der flache Endbereich des Kabels in Formschluß mit dem Einführöffnungsabschnitt des Verbinders stehen. Der Begriff "Formschluß", wie er im Sinne dieser Anmeldung verwendet wird, beschreibt, daß beispielsweise Konturen der Leiterplatte bzw. des flachen Endbereichs des Kabels zumindest bereichsweise den Verbinder kontaktieren, so daß ein Kraftschluß und/oder ein Reibschluß zwischen der Leiterplatte bzw. dem Kabel und dem Verbinder besteht. In anderen Worten liegen beispielsweise zwei oder mehr Flächen derart aneinander an, daß bei einer Krafteinwirkung im wesentlichen parallel zu der Einführrichtung (d.h. im wesentlichen in der Einführrichtung oder im wesentlichen entgegen der Einführrichtung) die beiden aneinander liegenden Flächen nicht bewegbar sind, so daß ein Herausziehen der Leiterplatte bzw. des Kabels entgegen der Einführrichtung E nur dann möglich ist, wenn die Zugkraft einen vorbestimmten Wert überschreitet. Beispielsweise kann die notwendige Zugkraft zum Herausziehen der Leiterplatte größer als 10 N oder größer als 50 N sein.

Das erste Unterkontaktelement ist von dem zweiten Unterkontaktelement verschieden. Mit anderen Worten sind das erste und zweite Unterkontaktelement unterschiedlich geformte bzw. ausgebildete Unterkontaktelemente, die nicht zueinander kongruent sind. Das bedeutet, daß eine bildliche Projektion des ersten Unterkontaktelements des Verbinders in die Ebene E-H, welche durch die Einführrichtung E und die Höhenrichtung H aufgespannt wird, nicht mit einer Projektion des zweiten Unterkontaktelements in die Ebene E-H durch Drehen bzw. Verlagern zur Deckung gebracht werden kann. Mit anderen Worten kann das zweite Unterkontaktelement entlang einer Blickrichtung, die parallel zur Längsrichtung L orientiert ist, nicht vollständig durch das erste Unterkontaktelement verdeckt werden.

Das zumindest eine erste Unterkontaktelement ist von dem zumindest einen zweiten Unterkontaktelement entlang der Längsrichtung L beabstandet angeordnet. Die Längsrichtung L kann dabei in der Kontaktierungsposition parallel zu einer Kante der mit dem Verbinder kontaktierten Leiterplatte verlaufen. Der Abstand zwischen dem ersten Unterkontaktelement und dem dazu benachbarten zweiten Unterkontaktelement wird auch als pitch-Abstand bezeichnet und entspricht den Abständen der ersten und zweiten elektrischen Leiter der zu kontaktierenden Leiterplatte. Beispielsweise kann der pitch-Abstand etwa 2 mm, etwa 1 mm oder etwa 0,5 mm betragen.

Der Verbinder umfaßt weiter:

- zumindest ein erstes Oberkontaktelement, welches ausgelegt ist, mit zumindest einem zugeordneten dritten elektrischen Leiter auf der Oberseite des flachen Endbereichs elektrisch zu kontaktieren und

- zumindest ein zweites Oberkontaktelement, welches ausgelegt ist, mit zumindest einem zugeordneten vierten elektrischen Leiter auf der Oberseite des flachen Endbereichs elektrisch zu kontaktieren,

wobei das erste Oberkontaktelement von dem zweiten Oberkontaktelement entlang der Längsrichtung L beabstandet angeordnet ist, wobei das erste Oberkontaktelement von dem zweiten Oberkontaktelement verschieden ist und wobei das erste Oberkontaktelement innerhalb der Schnittebene E-H nicht kongruent zu dem zweiten Oberkontaktelement ist.

Vorteilhafterweise können die Unterseite und die Oberseite der Leiterplatte bzw. des flachen Endbereichs des Kabels gleichzeitig durch den Verbinder elektrisch kontaktiert werden. Weiter vorteilhafterweise ist die zwischen benachbarten und verschiedenen, das heißt nicht identisch geformten, ersten und zweiten Oberkontaktelementen ausgebildete elektrische Kapazität geringer im Vergleich zu zwei benachbarten identischen Oberkontaktelementen. Dadurch kann der Verbinder vorteilhafterweise elektrische Signale zur der Oberseite und der Unterseite der Leiterplatte mit einer höheren Frequenz übertragen als ein entsprechend aufgebauter Verbinder aus dem Stand der Technik. Weiter vorteilhafterweise ist es nicht notwendig die Leiterplatte mit durchgängigen Löchern zu versehen, um Signale von der Unterseite zur Oberseite zu übertragen, da Unterseite und Oberseite der Leiterplatte gleichzeitig durch den Verbinder kontaktierbar sind, wodurch auf der Leiterplatte höhere Frequenzen verarbeitet werden können, beispielsweise Frequenzen größer als 2 GHz, größer als 5 GHz oder größer als 10 GHz.

Bevorzugt kann der Verbinder als MXM Verbinder ausgebildet sein, welcher geometrische Abmessungen und ein Kontaktierungsschema gemäß der Spezifikation Qseven 1.20 aufweist. Aufgrund der vorteilhaften geometrischen Ausbildung der Unterkontaktelemente und der Oberkontaktelemente werden die elektrischen Spezifikationen, laut Qseven 1,25 GHz, hinsichtlich der Höhe der übertragbaren Frequenzen übererfüllt. Vorteilhafterweise können somit Leiterplatten, welche der Spezifikation Qseven 1.20 entsprechen, durch den Verbinder aufgenommen werden. Weiter vorteilhafterweise können solche Leiterplatten mit elektronischen Bauelementen versehen werden, die elektrische Signal mit höheren Frequenzen als 1,25 GHz intern und extern verarbeiten. Dadurch können leitungsfähigere Leiterplatten verwendet werden, wobei vorteilhafterweise das durch die Geometrie des MXM Verbinders vorgegebene Layout der Leiterplatte beibehalten werden kann.

Das erste Oberkontaktelement ist dabei von dem zweiten Oberkontaktelement verschieden. Mit anderen Worten sind das erste und zweite Oberkontaktelement unterschiedlich geformte bzw. ausgebildete Oberkontaktelemente, die nicht zueinander kongruent sind. Das bedeutet, daß eine bildliche Projektion des ersten Oberkontaktelements des Verbinders in die Ebene E-H, welche durch die Einführrichtung E und die Höhenrichtung H aufgespannt wird, nicht mit einer Projektion des zweiten Oberkontaktelements in die Ebene E-H durch Drehen bzw. Verlagern zur Deckung gebracht werden kann. Mit anderen Worten kann das zweite Oberkontaktelement entlang einer Blickrichtung, die parallel zur Längsrichtung L orientiert ist, nicht vollständig durch das erste Oberkontaktelement verdeckt werden. Ferner sind das erste und zweite Oberkontaktelement verschieden und nicht kongruent zu jedem der ersten und zweiten Unterkontaktelemente. Mit anderen Worten ist das erste Oberkontaktelement verschieden vom ersten Unterkontaktelement und verschieden vom zweiten Unterkontaktelement. Weiter ist das zweite Oberkontaktelement verschieden vom ersten Unterkontaktelement und verschieden vom zweiten Unterkontaktelement.

Das zumindest eine erste Oberkontaktelement ist von dem zumindest einen zweiten Oberkontaktelement entlang der Längsrichtung L beabstandet angeordnet. Die Längsrichtung L kann dabei in der Kontaktierungsposition parallel zu einer Kante der mit dem Verbinder kontaktierten Leiterplatte verlaufen. Der Abstand zwischen dem ersten Oberkontaktelement und dem dazu benachbarten zweiten Oberkontaktelement wird auch als pitch-Abstand bezeichnet und entspricht den Abständen der ersten und zweiten elektrischen Leiter der zu kontaktierenden Leiterplatte. Beispielsweise kann der pitch-Abstand etwa 2 mm, etwa 1 mm oder etwa 0,5 mm betragen und ist insbesondere identisch zum pitch-Abstand zwischen dem ersten und zweiten Unterkontaktelement.

Die Unterkontaktelemente und die Oberkontaktelemente sind aus einem elektrisch leitfähigen, rückstellfähigen Material ausgebildet. Der Begriff "rückstellfähig", wie er im Sinne dieser Anmeldung verstanden wird, beschreibt, daß eines der Unterkontaktelemente bzw. eines der Oberkontaktelemente nach einer mechanischen Belastung bzw. elastischen oder plastischen Verformung durch eine Kraft in einer Belastungsrichtung im wesentlichen wieder in die ursprüngliche Form und/oder Lage zurückkehrt. Die mechanische Belastung bzw. Verformung des Unterkontaktelements bzw. des Oberkontaktelements erfolgt beispielsweise während des Einführens der Leiterplatte entlang der Einführrichtung E in den Einführöffnungsabschnitt des Verbinders, wodurch mittels des eingeführten Endbereichs der Leiterplatte eine Kraft in Belastungsrichtung an dem Unterkontaktelement bzw. dem Oberkontaktelement angelegt wird, die im wesentlichen senkrecht zur Einführrichtung E ist. Das Unterkontaktelement bzw. das Oberkontaktelement bringt eine entsprechende gleich große Reaktionskraft auf, welche auf den zugeordneten elektrischen Leiter der Leiterplatte als Andruckkraft wirkt. Die Andruckkraft kann dabei für jedes Unterkontaktelement bzw. Oberkontaktelement etwa 0,01 N bis etwa 1 N betragen. Die Belastungsrichtung bzw. die Andruckkraft eines der Unterkontaktelemente kann im wesentlichen antiparallel zu der Belastungsrichtung bzw. der Andruckkraft eines der Oberkontaktelemente stehen.

Weiter sind die ersten und zweiten Unterkontaktelemente ausgelegt die Unterseite des flachen Endbereichs der Leiterplatte bzw. des Kabels in zugeordneten ersten bzw. zweiten Unterkontaktbereichen elektrisch bzw. mechanisch zu kontaktieren, wobei der erste Unterkontaktbereich von dem zweiten Unterkontaktbereich zwar entlang der Längsrichtung L jedoch bevorzugt nicht entlang der Einführrichtung E beabstandet ist. Mit anderen Worten sind die ersten und zweiten Unterkontaktelemente ausgelegt die Unterseite des flachen Endbereichs der Leiterplatte bzw. des Kabels mit einem konstanten Abstand entlang der Einführrichtung E von dem Ende der Leiterplatte bzw. des Kabels zu kontaktieren.

Anders ausgedrückt sind die ersten bzw. zweiten Unterkontaktbereiche der ersten und zweiten Unterkontaktelemente im wesentlichen geradlinig entlang der Längsrichtung L angeordnet.

Entsprechend sind die ersten und zweiten Oberkontaktelemente ausgelegt die Oberseite des flachen Endbereichs der Leiterplatte bzw. des Kabels jeweils in zugeordneten ersten bzw. zweiten Oberkontaktbereichen elektrisch bzw. mechanisch zu kontaktieren, wobei der erste Oberkontaktbereich von dem zweiten Oberkontaktbereich zwar entlang der Längsrichtung L jedoch bevorzugt nicht entlang der Einführrichtung E beabstandet ist. Mit anderen Worten sind die ersten und zweiten Oberkontaktelemente ausgelegt die Unterseite des flachen Endbereichs der Leiterplatte bzw. des Kabels mit einem konstanten Abstand entlang der Einführrichtung E von dem Ende der Leiterplatte bzw. des Kabels zu kontaktieren. Anders ausgedrückt sind die ersten bzw. zweiten Oberkontaktbereiche der ersten und zweiten Oberkontaktelemente im wesentlichen geradlinig entlang der Längsrichtung L angeordnet.

Die geometrische Ausdehnung des ersten Unterkontaktelements in der Ebene E-H, welche durch die Einführrichtung E und die Höhenrichtung H aufgespannt wird, kann durch die Funktion $H_{U1}(e,h)$ beschrieben werden. Dabei stellen die Variablen $e$ und $h$ die Koordinaten in der Ebene E-H dar. Die Funktion $H_{U1}$ ist eine binäre Funktion in Analogie zur Heaviside-Funktion und in Abhängigkeit von den Koordinaten $e$ und $h$ mit einem Wertebereich von 0 und 1, wobei gilt: $H_{U1}(e,h) = 1$ für einen Punkt $(e,h)$, der zu dem ersten Unterkontaktelement gehört und $H_{U1}(e,h) = 0$ für einen Punkt $(e,h)$, der außerhalb des ersten Unterkontaktelements liegt. Entsprechend gilt: $H_{U2}(e,h) = 1$ für einen Punkt $(e,h)$, der zu dem zweiten Unterkontaktelement gehört und $H_{U2}(e,h) = 0$ für einen Punkt $(e,h)$, der außerhalb des zweiten Unterkontaktelements liegt.

Demnach beschreibt der Wert A$_1$ des Integrals über die gesamte Ebene E-H $A_1 = \iint H_{U1}(e,h)\, \mathrm{d}e\, \mathrm{d}h$ für das erste Unterkontaktelement die Schnittfläche des ersten Unterkontaktelements mit der Ebene E-H bzw. die Projektionsfläche des ersten Unterkontaktelements auf die Ebene E-H. Entsprechend beschreibt der Wert A$_2$ des Integrals über die gesamte Ebene E-H $A_2 = \iint H_{U2}(e,h)\, \mathrm{d}e\, \mathrm{d}h$ für das zweite Unterkontaktelement die Schnittfläche des zweiten Unterkontaktelements mit der Ebene E-H bzw. die Projektionsfläche des zweiten Unterkontaktelements auf die Ebene E-H.

Ein Maß für die Kongruenz $K_U$ des ersten und zweiten Unterkontaktelements kann anhand der Überlappung der Projektion beider Unterkontaktelemente auf die Ebene E-H definiert werden, welche mittels der Projektionsflächen A$_1$ und A$_2$ normiert ist. Das Kongruenzmaß $K_U$ ist daher wie folgt definiert:

$$K_U = 2 \iint H_{U1}(e,h) \cdot H_{U2}(e,h)\, \mathrm{d}e\, \mathrm{d}h \; \Big/ \; (A_1 + A_2).$$

Für identische Unterkontaktelemente liefert das Kongruenzmaß den maximalen Wert 1, sofern die Projektionen der beiden Unterkontaktelemente in der Ebene E-H zusammenfallen. Für Unterkontaktelemente, deren Projektion in die Ebene E-H keinen gemeinsamen Punkt aufweisen, liefert das Kongruenzmaß den minimalen Wert 0. Für nicht identische, daß heißt auch nicht kongruente, Unterkontaktelemente ist der Wert des Kongruenzmaßes immer kleiner als 1.

Vorzugsweise ist das Kongruenzmaß $K_U$ der Kongruenz zwischen dem ersten Unterkontaktelement und dem zweiten Unterkontaktelement kleiner als 0,9, bevorzugt kleiner als 0,8 und besonders bevorzugt kleiner als 0,7.

Die Berechnung der Kongruenz zwischen dem ersten und zweiten Oberkontaktelement kann analog zur Berechnung der Kongruenz zwischen dem ersten und zweiten Unterkontaktelement erfolgen. Die Funktion $H_{O1}(e,h)$ beschreibt die geometrische Ausdehnung des ersten Oberkontaktelements in der Ebene E-H und die Funktion $H_{O2}(e,h)$ beschreibt die geometrische Ausdehnung des zweiten Oberkontaktelements in der Ebene E-H. Die Funktionen $H_{O1}$ und $H_{O2}$ sind binäre Funktionen, wobei gilt: $H_{O1}(e,h) = 1$ für einen Punkt $(e,h)$, der zu dem ersten Oberkontaktelement gehört und $H_{O1}(e,h) = 0$ für einen Punkt $(e,h)$, der außerhalb des ersten Oberkontaktelements liegt. Entsprechend gilt: $H_{O2}(e,h) = 1$ für einen Punkt $(e,h)$, der zu dem zweiten Oberkontaktelement gehört und $H_{O2}(e,h) = 0$ für einen Punkt $(e,h)$, der außerhalb des zweiten Oberkontaktelements liegt.

Entsprechend beschreibt der Wert A$_1$ des Integrals über die gesamte Ebene E-H $A_1 = \iint H_{O1}(e,h)\, \mathrm{d}e\, \mathrm{d}h$ für das erste Oberkontaktelement dann die Schnittfläche des ersten Oberkontaktelements mit der Ebene E-H bzw. die Projektionsfläche des ersten Oberkontaktelements auf die Ebene E-H. Entsprechend beschreibt dann der Wert A$_2$ des Integrals über die gesamte Ebene E-H $A_2 = \iint H_{O2}(e,h)\, \mathrm{d}e\, \mathrm{d}h$ für das zweite Oberkontaktelement die Schnittfläche des zweiten Oberkontaktelements mit der Ebene E-H bzw. die Projektionsfläche des zweiten Oberkontaktelements auf die Ebene E-H.

Das Maß für die Kongruenz $K_O$ des ersten und zweiten Oberkontaktelements wird anhand der Überlappung der Projektion beider Oberkontaktelemente auf die Ebene E-H definiert, welche mittels der Projektionsflächen $A_1$ und $A_2$ normiert ist. Das Kongruenzmaß $K_O$ ist daher wie folgt definiert:

$$K_O = 2 \iint H_{O1}(e,h) \cdot H_{O2}(e,h) \, \mathrm{d}e \, \mathrm{d}h \left/ (A_1 + A_2) \right. .$$

Für identische Oberkontaktelemente liefert das Kongruenzmaß den maximalen Wert 1, sofern die Projektionen der beiden Oberkontaktelemente in der Ebene E-H zusammenfallen. Für Oberkontaktelemente, deren Projektion in die Ebene E-H keinen gemeinsamen Punkt aufweisen, liefert das Kongruenzmaß den minimalen Wert 0. Für nicht identische, daß heißt auch nicht kongruente, Oberkontaktelemente ist der Wert des Kongruenzmaßes immer kleiner als 1.

Vorzugsweise ist das Kongruenzmaß $K_O$ der Kongruenz zwischen dem ersten Oberkontaktelement und dem zweiten Oberkontaktelement kleiner als 0,9, bevorzugt kleiner als 0,8 und besonders bevorzugt kleiner als 0,7.

Vorzugsweise sind eine Vielzahl von (identischen) ersten Unterkontaktelementen alternierend bzw. abwechselnd mit einer Vielzahl von (identischen) zweiten Unterkontaktelementen entlang der Längsrichtung L angeordnet. Mit anderen Worten kann ein erstes Unterkontaktelement von einem oder zwei zweiten Unterkontaktelement(en) umgeben sein. Jedoch ist ein erstes Unterkontaktelement nicht benachbart zu einem weiteren ersten Unterkontaktelement angeordnet. Entsprechend kann ein zweites Unterkontaktelement von einem oder zwei ersten Unterkontaktelement(en) umgeben sein. Jedoch ist ein zweites Unterkontaktelement nicht benachbart zu einem weiteren zweiten ersten Unterkontaktelement angeordnet. Entsprechend sind vorzugsweise eine Vielzahl von ersten Oberkontaktelementen alternierend bzw. abwechselnd mit einer Vielzahl von zweiten Oberkontaktelementen entlang der Längsrichtung L angeordnet.

Vorzugsweise ist die geometrische Gestalt der ersten und zweiten Unterkontaktelemente derart ausgelegt, daß zwischen einem des zumindest einen ersten Unterkontaktelements und einem dazu benachbarten zweiten Unterkontaktelement eine vorbestimmte elektrische Kapazität oder Impedanz ausgebildet ist. Mit anderen Worten sind vorzugsweise das erste und zweite Unterkontaktelement derart geometrisch ausgestaltet und derart relativ zueinander angeordnet, so daß zwischen zwei benachbarten ersten und zweiten Unterkontaktelementen eine vorbestimmte elektrische Kapazität oder Impedanz bzw. Wellenwiderstand generiert wird.

Das erste und zweite Unterkontaktelement sind bevorzugt mit einem konstanten Abstand entlang der Längsrichtung L angeordnet. Mit anderen Worten verlaufen das erste und zweite Unterkontaktelement entlang einer Blickrichtung, die parallel zur Einführrichtung E orientiert ist, parallel zueinander. Daher kann die auftretende elektrische Kapazität zwischen dem ersten und zweiten Unterkontaktelement größer sein je größer das Kongruenzmaß $K_U$ ist. Dies bedeutet dann, daß sich ein größerer Bereich des ersten und zweiten Unterkontaktelements gegenüberliegen und in diesem Bereich als Plattenkondensator wirken können. Je größer die Fläche dieses gegenüberliegenden Bereiches ist, also je größer das Kongruenzmaß $K_U$ ist, desto größer ist die wirkende Kapazität zwischen dem ersten und zweiten Unterkontaktelement. Daher kann die effektive Kapazität des Verbinders bzw. der Unterkontaktelemente durch eine an die gewünschte Kapazität angepaßte Form des ersten und zweiten Unterkontaktelements vorbestimmt werden.

Insbesondere ist die Kapazität zwischen dem ersten und zweiten Unterkontaktelement bei einem vorgegebenen Abstand zwischen beiden Unterkontaktelementen kleiner als die Kapazität zwischen zwei ersten Unterkontaktelementen oder zwischen zwei zweiten Unterkontaktelementen bei gleichem Abstand.

Vorzugsweise ist die geometrische Gestalt der ersten und zweiten Unterkontaktelemente derart ausgelegt, daß zwischen einem ersten Unterkontaktierungsbereich des ersten Unterkontaktelements und einem ersten Unterkontaktanschlußbereich des ersten Unterkontaktelements eine elektrische Signallaufzeit $T_1(f)$ auftritt und zwischen einem zweiten Unterkontaktierungsbereich des zweiten Unterkontaktelements und einem zweiten Unterkontaktanschlußbereich des zweiten Unterkontaktelements eine elektrische Signallaufzeit $T_2(f)$ auftritt, wobei die beiden Signallaufzeiten im wesentlichen gleich sind.

Die Signallaufzeiten $T_1(f)$ und $T_2(f)$ zwischen den entsprechenden Unterkontaktierungsbereichen, welche ausgelegt sind mit der Leiterplatte elektrisch zu kontaktieren, und den entsprechenden Unterkontaktanschlußbereichen, welche ausgelegt sind mit der Trägerleiterplatte elektrisch zu kontaktieren, sind in der Regel von der Frequenz f des übertragenen Signals abhängig. Dabei sind die Signallaufzeiten $T_1(f)$ und $T_2(f)$ berechenbar als Linienintegral über den Laufweg x des Signals und die Gruppengeschwindigkeitsfunktion v(x) entlang des Laufwegs, wobei der Laufweg 1 den Laufweg durch das erste Unterkontaktelement beschreibt und der Laufweg 2 den Laufweg durch das zweite Unterkontaktelement beschreibt, so daß gilt:

$$T_1(f) = \int\limits_{\text{Laufweg 1}} \frac{1}{v(x,f)} \, \mathrm{d}x \quad \text{und} \quad T_2(f) = \int\limits_{\text{Laufweg 2}} \frac{1}{v(x,f)} \, \mathrm{d}x .$$

Der Laufweg kann bevorzugt derart gewählt werden, daß Signallaufzeiten $T_1(f)$ und $T_2(f)$ im wesentlichen gleich sind. Der Begriff "im wesentlichen gleich" mit Bezug auf die Signallaufzeiten kann bedeuten, daß die Differenz $|T_1(f) - T_2(f)|$ kleiner als etwa 10 ns und bevorzugt kleiner als etwa 1 ns ist. Weiter kann der Begriff "im wesentlichen gleich" bedeuten, daß der relative Abstand $2|T_1(f) - T_2(f)| / |T_1(f) + T_2(f)|$ kleiner als etwa 0,01 und bevorzugt kleiner als etwa 0,001 ist.

Da die Gruppengeschwindigkeitsfunktion sowie die Signalaufzeiten frequenzabhängig sind, können die beiden Signallaufzeiten $T_1(f)$ und $T_2(f)$ insbesondere für Frequenzen von 1 GHz bis 10 GHz im wesentlichen gleich sein.

Vorzugsweise ist zwischen dem ersten Unterkontaktelement und dem zweiten Unterkontaktelement zumindest bereichsweise ein Dielektrikum derart angeordnet, daß zwischen dem ersten Unterkontaktierungsbereich des ersten Unterkontaktelements und dem ersten Unterkontaktanschlußbereich des ersten Unterkontaktelements eine vorbestimmte elektrische Signallaufzeit $T_1(f)$ auftritt.

Weiter vorzugsweise ist zwischen dem ersten Unterkontaktelement und dem zweiten Unterkontaktelement zumindest bereichsweise ein Dielektrikum derart angeordnet, daß zwischen dem zweiten Unterkontaktierungsbereich des zweiten Unterkontaktelements und dem zweiten Unterkontaktanschlußbereich des zweiten Unterkontaktelements eine vorbestimmte elektrische Signallaufzeit $T_2(f)$ und/oder zwischen dem ersten und zweiten Unterkontaktierungsbereich und dem ersten und zweiten Unterkontaktanschlußbereich eine vorbestimmte elektrische Impedanz $Z(f)$ auftritt.

Da die Signallaufzeiten $T_1(f)$ und $T_2(f)$ als Linienintegral über den Laufweg x des Signals über die Gruppengeschwindigkeitsfunktion v(x) entlang des Laufwegs erhalten werden, können die Signallaufzeiten durch eine lokale Variation der Gruppengeschwindigkeit verändert werden. Das Anordnen eines Dielektrikums zumindest bereichsweise um einen elektrischen Leiter führt dabei zu einer Verringerung der Gruppengeschwindigkeit in dem Bereich des Signallaufwegs durch den Leiter, welcher von dem Dielektrikum umgeben ist.

Der erfindungsgemäße Verbinder umfaßt zumindest ein erstes Unterkontaktelement und zumindest ein davon verschiedenes zweites Unterkontaktelement, wobei beide Unterkontaktelemente in der Regel durch ein Gehäuse des Verbinders aufgenommen sind. Das Gehäuse des Verbinders besteht zumindest in den zwischen den Unterkontaktelementen angeordneten Bereichen aus einem elektrisch nicht leitfähigen Material, wie beispielsweise einem elektrisch isolierenden Polymer. Daher wirkt das Gehäuse des Verbinders als Dielektrikum. Jedoch können innerhalb des Gehäuses Öffnungen, Aussparungen bzw. Materialverdünnungen vorgesehen sein, welche zwischen den Unterkontaktelementen angeordnet sind.

Bevorzugt ist der Laufweg 1 bzw. die Weglänge x1, an welcher das erste Unterkontaktelement von dem Dielektrikum des Gehäuses umgeben ist oder daran angrenzt verschieden von dem Laufweg 2 bzw. der Weglänge x2, an welcher das zweite Unterkontaktelement von dem Dielektrikum des Gehäuses umgeben ist oder daran angrenzt. So kann durch die unterschiedliche Wegführung des ersten und zweiten Unterkontaktelements durch das Gehäuse und einer entsprechenden Ausbildung von dielektrikumfreien Bereichen im Gehäuse die Gruppengeschwindigkeitsfunktion für beide Unterkontaktelemente vorbestimmt werden, um vorbestimmte Signallaufzeiten für einen vorbestimmten Frequenzbereich, beispielsweise 1 GHz bis 10 GHz, zu erreichen.

Vorzugsweise ist die geometrische Gestalt der ersten und zweiten Oberkontaktelemente derart auslegt ist, daß zwischen einem des zumindest einen ersten Oberkontaktelements und einem dazu benachbarten zweiten Oberkontaktelement eine vorbestimmte elektrische Kapazität oder Impedanz ausgebildet ist.

Das erste und zweite Oberkontaktelement sind bevorzugt mit einem konstanten Abstand entlang der Längsrichtung L angeordnet. Daher kann die auftretende elektrische Kapazität zwischen dem ersten und zweiten Oberkontaktelement größer sein je größer das Kongruenzmaß $K_O$ ist. Dies bedeutet dann, daß sich ein größerer Bereich des ersten und zweiten Oberkontaktelements gegenüberliegen und in diesem Bereich als Plattenkondensator wirken können. Je größer die Fläche dieses gegenüberliegenden Bereiches ist, also je größer das Kongruenzmaß $K_O$ ist, desto größer ist die wirkende Kapazität zwischen dem ersten und zweiten Oberkontaktelement. Daher kann die effektive Kapazität des Verbinders bzw. der Oberkontaktelemente durch eine an die gewünschte Kapazität angepaßte Form des ersten und zweiten Oberkontaktelements vorbestimmt werden.

Insbesondere ist die Kapazität zwischen dem ersten und zweiten Oberkontaktelement bei einem vorgegebenen Abstand zwischen beiden Oberkontaktelementen kleiner als die Kapazität zwischen zwei ersten Oberkontaktelementen oder zwischen zwei zweiten Oberkontaktelementen bei gleichem Abstand.

Vorzugsweise ist die geometrische Gestalt der ersten und zweiten Oberkontaktelemente derart auslegt ist, daß zwischen einem ersten Oberkontaktierungsbereich des ersten Oberkontaktelements und einem ersten Oberkontaktanschlußbereich des ersten Oberkontaktelements eine elektrische Signallaufzeit $T_3(f)$ auftritt und zwischen einem zweiten Oberkontaktierungsbereich des zweiten Oberkontaktelements und einem zweiten Oberkontaktanschlußbereich des zweiten Unterkontaktelements eine elektrische Signallaufzeit $T_4(f)$ auftritt, wobei die beiden Signallaufzeiten im wesentlichen gleich sind.

Die Signallaufzeiten $T_3(f)$ und $T_4(f)$ zwischen den entsprechenden Oberkontaktierungsbereichen, welche ausgelegt sind mit der Leiterplatte elektrisch zu kontaktieren, und den entsprechenden Oberkontaktanschlußbereichen, welche ausgelegt sind mit der Trägerleiterplatte elektrisch zu kontaktieren, sind in der Regel von der Frequenz f des übertragenen Signals abhängig. Dabei sind die Signallaufzeiten $T_3(f)$ und $T_4(f)$ berechenbar als Linienintegral über den Laufweg x des Signals und die Gruppengeschwindigkeitsfunktion $v(x)$ entlang des Laufwegs, wobei der Laufweg 3 den Laufweg durch das erste Oberkontaktelement beschreibt und der Laufweg 4 den Laufweg durch das zweite Oberkontaktelement beschreibt, so daß gilt:

$$T_3(f) = \int_{\text{Laufweg}\,3} \frac{1}{v(x,f)}\,dx \quad \text{und} \quad T_4(f) = \int_{\text{Laufweg}\,4} \frac{1}{v(x,f)}\,dx\,.$$

Der Laufweg kann bevorzugt derart gewählt werden, daß Signallaufzeiten $T_3(f)$ und $T_4(f)$ im wesentlichen gleich sind. Mit anderen Worten kann die Differenz $|T_3(f) - T_4(f)|$ kleiner als etwa 10 ns und bevorzugt kleiner als etwa 1 ns sein und/oder der relative Abstand $2\,|T_3(f) - T_4(f)|\,/|T_3(f) + T_4(f)|$ kann kleiner als etwa 0,01 und bevorzugt kleiner als etwa 0,001 sein. Da die Gruppengeschwindigkeitsfunktion sowie die Signallaufzeiten frequenzabhängig sind, können die beiden Signallaufzeiten $T_3(f)$ und $T_4(f)$ insbesondere für Frequenzen von 1 GHz bis 10 GHz im wesentlichen gleich sein. Besonders bevorzugt kann der Laufweg derart gewählt werden, daß Signallaufzeiten $T_1(f)$, $T_2(f)$, $T_3(f)$ und $T_4(f)$ im wesentlichen gleich sind, so daß vorteilhafterweise die Signale gleichzeitig an der Oberseite und der Unterseite der Leiterplatte anliegen.

Vorzugsweise ist zwischen dem ersten Oberkontaktelement und dem zweiten Oberkontaktelement zumindest bereichsweise ein Dielektrikum derart angeordnet, daß zwischen dem ersten Oberkontaktierungsbereich und dem ersten Oberkontaktanschlußbereich eine vorbestimmte elektrische Signallaufzeit $T_3(f)$ auftritt.

Weiter vorzugsweise ist zwischen dem ersten Oberkontaktelement und dem zweiten Oberkontaktelement zumindest bereichsweise ein Dielektrikum derart angeordnet, daß zwischen dem zweiten Oberkontaktierungsbereich und dem zweiten Oberkontaktanschlußbereich eine vorbestimmte elektrische Signallaufzeit $T_4(f)$ und/oder zwischen dem ersten und zweiten Oberkontaktierungsbereich und dem ersten und zweiten Oberkontaktanschlußbereich eine vorbestimmte elektrische Impedanz $Z(f)$ auftritt.

Wie bereits mit Bezug auf die Unterkontaktelemente beschrieben, können die Signallaufzeiten durch eine lokale Variation der Gruppengeschwindigkeit der elektrischen Signale, die durch die Oberkontaktelemente laufen, bzw. durch Anordnen eines Dielektrikums verändert werden. Der bevorzugte Verbinder umfaßt zumindest ein erstes Oberkontaktelement und zumindest ein davon verschiedenes zweites Oberkontaktelement, wobei beide Oberkontaktelemente in der Regel durch das Gehäuse des Verbinders aufgenommen sind.

Bevorzugt ist der Laufweg 3 bzw. die Weglänge x3, an welcher das erste Oberkontaktelement von dem Dielektrikum des Gehäuses umgeben ist oder daran angrenzt verschieden von dem Laufweg 4 bzw. der Weglänge x4, an welcher das zweite Oberkontaktelement von dem Dielektrikum des Gehäuses umgeben ist oder daran angrenzt. So kann durch die unterschiedliche Wegführung des ersten und zweiten Oberkontaktelements durch das Gehäuse und einer entsprechenden Ausbildung von dielektrikumfreien Bereichen im Gehäuse die Gruppengeschwindigkeitsfunktion für beide Oberkontaktelemente vorbestimmt werden, um vorbestimmte Signallaufzeiten für einen vorbestimmten Frequenzbereich, beispielsweise 1 GHz bis 10 GHz, zu erreichen.

Die auftretenden Gruppengeschwindigkeitsfunktionen, Signallaufzeiten, Impedanzen und Wellenwiderstände können numerisch anhand einer vorgegebenen geometrischen Gestalt der Unterkontaktelemente und/oder der Oberkontaktelemente sowie der Verteilung des Dielektrikums zwischen den Unterkontaktelementen und/oder Oberkontaktelementen berechnet werden. Beispielsweise können die numerischen Berechnungen mittels dem an der Univerisity of California in Berkeley entwickelte Programmpaket SPICE oder mittels der Programmpakete Matlab / SimuLink der Mathworks Inc. erfolgen. Um weitere Sollvorgaben zu erfüllen, wie beispielsweise vorgegebene Signallaufzeiten und/oder Impedanzen an einzelnen Unterkontaktelementen und/oder Oberkontaktelementen zu erzielen, können die zugrundeliegende Modellparameter, wie beispielsweise Geometrie bzw. die Verteilung des Dielektrikums, durch Versuch und Irrtum manuell oder automatisch (Verfahren der Hedgehog-Inversion) verändert werden, wobei die Modellparameter zur Ausbildung des Verbinders gewählt werden, welche die Sollvorgaben mit der geringsten Abweichung und hinreichend genau erfüllen. Mit verschiedener Optimierungsalgorithmen ist es auch möglich aufgrund der Sollvorgaben durch iterative Änderungen der Modellparameter eine Geometrie des Verbinders bzw. dessen Unterkontaktelemente und/oder Oberkontaktelemente und dessen Dielektrikum zu ermitteln, welche die Sollvorgaben bestmöglich erfüllen.

Kontaktsystem gemäß einem Aspekt

Ein Aspekt der vorliegenden Erfindung betrifft ein Kontaktsystem umfassend:

- eine Leiterplatte;
- eine Trägerleiterplatte mit:
- einem Verbinder, in welchem ein erster Endbereich der Leiterplatte zumindest bereichsweise aufgenommen ist, wobei die Leiterplatte mittels des Verbinders mit der Trägerleiterplatte elektrisch und mechanisch verbunden ist,

- einem Hilfsverbinder mit einer Verriegelungseinrichtung, mit welcher ein zweiter Endbereich der Leiterplatte verriegelt ist, wobei die Leiterplatte mittels des Hilfsverbinders mit der Trägerleiterplatte elektrisch und mechanisch verbunden ist.

Vorteilhafterweise ist es mittels des Hilfsverbinders möglich, die Leiterplatte mit einer höheren Stromstärke zu versorgen, insbesondere wenn der Hilfsverbinder elektrische Kontakte aufweist, welche ausgelegt sind, einen größeren elektrischen Strom zu leiten als die Unterkontaktelemente und Oberkontaktelemente des Verbinders. Vorteilhafterweise können somit Leistungselektronik oder energieintensive Bauteile, wie Prozessoren oder Grafikprozessoren, auf der Leiterplatte betrieben werden.

Weiter vorteilhafterweise kann mittels der Verriegelungsvorrichtung des Hilfsverbinders gleichzeitig mit der Versorgung der Leiterplatte mit elektrischer Energie eine Befestigung der Leiterplatter an der Trägerleiterplatte erfolgen. Daher ist es vorteilhafterweise nicht mehr notwendig weitere Befestigungselemente vorzusehen, wodurch die Montage der Leiterplatte an der Trägerleiterplatte vereinfacht wird.

Figurenbeschreibung

Nachfolgend wird eine bevorzugte Ausführungsform des Verbinders anhand der beigefügten Zeichnungen beispielhaft erläutert. Es zeigt:

Fig. 1: eine perspektivische Ansicht einer bevorzugten Ausführungsform des Verbinders (MXM Verbinder),

Fig. 2a,b: eine schematische Anschlußbelegung und Bemaßung der in Fig. 1 gezeigten Ausführungsform des Verbinders,

Fig. 3: eine Schnittansicht durch den in Fig. 1 gezeigten Verbinder,

Fig. 4: eine Seitenansicht eines ersten und zweiten Unterkontaktelements sowie eines ersten und zweiten Oberkontaktelements, wie in Fig. 3 gezeigt,

Fig. 5: eine perspektivische Ansicht der in Fig. 4 gezeigten Kontaktelemente,

Fig. 6: eine Seitenansicht einer Anordnung umfassend eine Trägerleiterplatte, welche einen erfindungsgemäßen Verbinder sowie einen Hilfsverbinder aufweist sowie eine Leiterplatte, und

Fig. 7: eine bevorzugte Ausführungsform eines Hilfsverbinders, wie in Fig. 6 gezeigt.

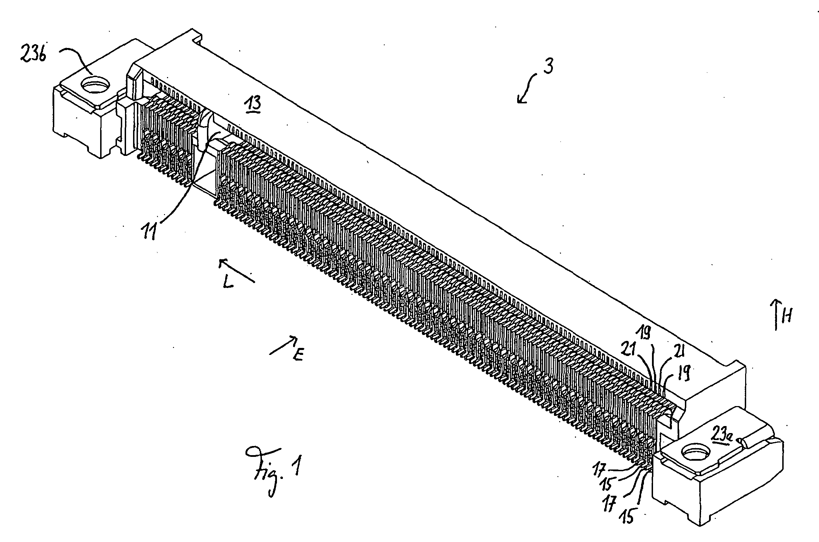

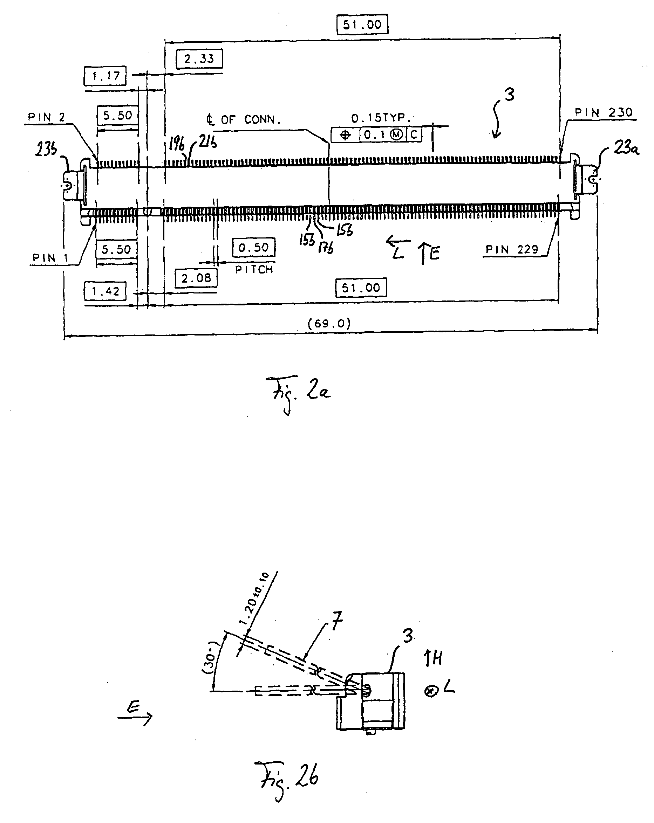

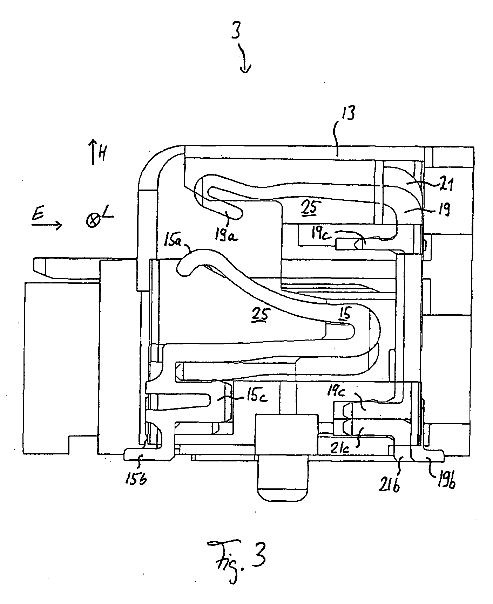

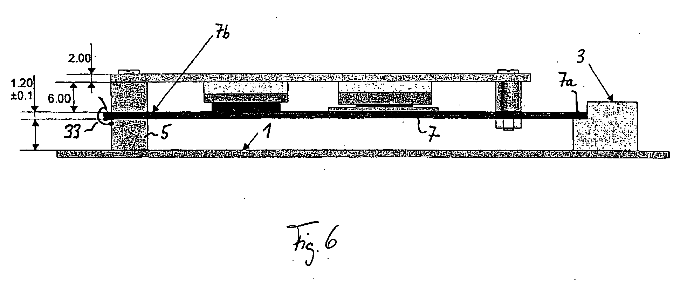

Die **Figur 1** zeigt eine perspektivische Ansicht einer bevorzugten Ausführungsform eines Verbinders 3, in welchen eine Leiterplatte (in Fig. 6 gezeigt) entlang einer Einführrichtung E einführbar ist. Eine dazugehörige Schnittansicht durch den Verbinder 3 ist in **Figur 3** gezeigt. Dazu weist der Verbinder 3 einen Einführöffnungsabschnitt 11 auf, welcher bevorzugt eine im wesentlichen rechteckige Gestalt aufweist. Eine lange Seite des Einführöffnungsabschnitts 11 erstreckt sich im wesentlichen entlang einer Längsrichtung L, welche im wesentlichen senkrecht zur Einführrichtung E orientiert ist. Die lange Seite (auch als Längsseite bezeichnet) des Einführöffnungsabschnitts 11 ist bevorzugt um einen Faktor größer als 8 länger als eine kurze Seite des Einführöffnungsabschnitts 11, welche sich entlang einer Höhenrichtung H erstreckt, welche im wesentlichen senkrecht zur Längsrichtung L sowie senkrecht zur Einführrichtung E orientiert ist. Besonders bevorzugt kann der Verbinder 3 als MXM Verbinder ausgebildet sein (insbesondere nach Spezifikation Qseven 1.20), dessen geometrische Maße in den **Figuren 2a und 2b** gezeigt sind. Dementsprechend kann sich der Einführöffnungsabschnitt 11 etwa 60 mm entlang der Längsrichtung L erstrecken. Die Dicke der einzuführenden Leiterplatte 7 beträgt in diesem Fall bevorzugt etwa 1,2 mm, so daß die Höhe des Einführöffnungsabschnitts 11 bevorzugt etwa 1,5 mm oder mehr beträgt. Eine in Millimetern bemaßte Darstellung der in Figur 1 gezeigten Ausführungsform ist in den Figuren 2a und 2b gezeigt.

Es versteht sich, daß der Einführöffnungsabschnitt 11 je nach beabsichtigter Verwendung bzw. je nach einzuführender Leiterplatte eine andere geometrische Ausgestaltung aufweisen kann. Beispielsweise kann der Einführöffnungsabschnitt 11 quadratisch ausgebildet sein. Weiter bevorzugt kann der Einführöffnungsabschnitt 11 in mehrere Einführöffnungsabschnittsbereiche unterteilt sein, wodurch vorteilshafterweise erreicht werden kann, daß sich die Leiterplatte lediglich in einer vorbestimmten Orientierung in den Einführöffnungsabschnitt 11 einführen läßt.

Der Einführöffnungsabschnitt 11 ist in einem Gehäuse 13 des Verbinders 3 ausgebildet, wobei das Gehäuse 13 ausgelegt ist, eine Vielzahl von ersten Unterkontaktelementen 15 und eine Vielzahl von zweiten Unterkontaktelementen 17 zu halten, so daß eines der ersten Unterkontaktelemente 15 von einem zweiten zugeordneten Unterkontaktelement 17 entlang der Längsrichtung L beabstandet angeordnet bzw. befestigt ist.

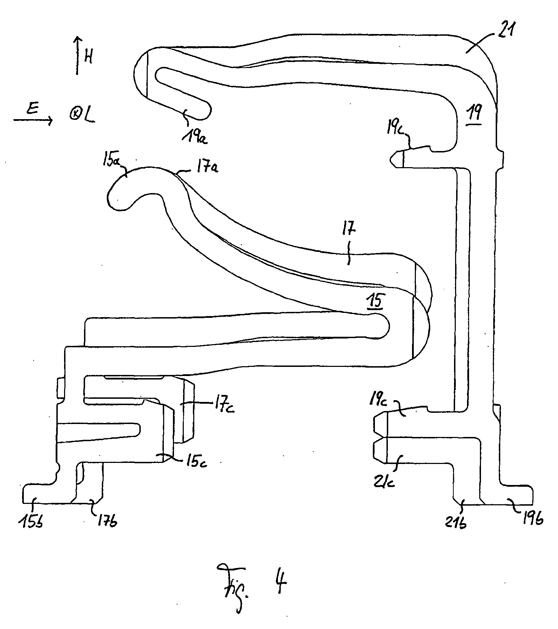

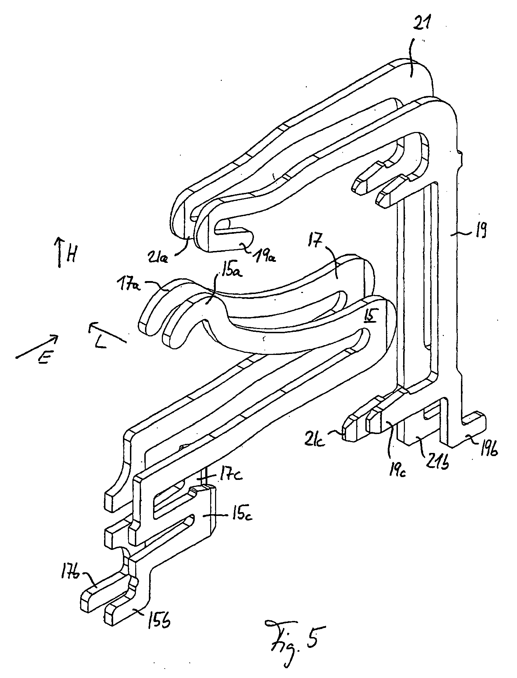

Die ersten und zweiten Unterkontaktelemente 15, 17 des in den Figuren 1 bis 3 gezeigten Verbinders sind freigestellt in der **Figur 4** als Seitenansicht und in **Figur 5** als perspektivische Ansicht gezeigt. Die identischen Elemente sind mit identischen Bezugszeichen versehen.

Jedes erste Unterkontaktelement 15 und jedes zweite Unterkontaktelement 17 ist aus einem elektrisch leitfähigen, rückstellfähigem Material ausgebildet. Der Begriff "rückstellfähig", wie er im Sinne dieser Anmeldung verstanden wird, beschreibt, daß das Material nach einer mechanischen Belastung durch eine äußere Kraft entlang einer Belastungsrichtung im wesentlichen wieder in die ursprüngliche Form zurückkehrt, wenn die Kraft entlang der Belastungsrichtung nicht mehr anliegt. Insbesondere umfaßt der Begriff "rückstellfähig" eine elastische Verformbarkeit des Materials.

Beispielsweise können das erste Unterkontaktelement 15 und das zweite Unterkontaktelement 17 aus einem Metall ausgebildet sein, wie beispielsweise einer kupferhaltigen Legierung. Bevorzugt können die Unterkontaktelemente aus einem entsprechenden Metallblech ausgestanzt sein. Besonders bevorzugt sind das erste und zweite Unterkontaktelement 15, 17 mit einer Gold- und/oder Silberlegierung plattiert bzw. galvanisiert, wodurch vorteilhafterweise der Übergangswiderstand der ersten und zweiten Unterkontaktelemente 15, 17 reduziert ist.

Durch das Einführen einer Leiterplatte 7 entlang der Einführrichtung E in den Einführöffnungsabschnitt 11 wird durch die Leiterplatte 7 eine Kraft entlang einer Belastungsrichtung, welche entgegen der Höhenrichtung orientiert ist, auf die Vielzahl von ersten und zweiten Unterkontaktelementen 15, 17 ausgeübt, wodurch diese entlang der Belastungsrichtung verformt werden. Durch das Einführen der Leiterplatte 7 entlang der Einführrichtung E in den Einführöffnungsabschnitt 11 gelangt die Leiterplatte 7 in eine Kontaktposition, in welcher jeder der ersten Unterkontaktelemente 15 in einem ersten Unterkontaktierungsbereich 15a mit einem zugeordneten ersten elektrischen Leiter der Leiterplatte 7 elektrisch kontaktierbar ist, wobei sich der elektrische Leiter auf einer Unterseite der Leiterplatte 7 befindet. Entsprechend wird jedes zweite Unterkontaktelement 17 in der Kontaktierungsposition in einem zweiten Unterkontaktierungsbereich 17a mit einem zugeordneten zweiten elektrischen Leiter der Leiterplatte 7 elektrisch kontaktiert.

Jedes erste Unterkontaktelement 15 umfaßt einen ersten Unterkontaktanschlußbereich 15b, der ausgelegt ist, mit einer Trägerleiterplatte 1 (in Fig. 6 gezeigt) elektrisch bzw. mechanisch verbunden zu sein. Insbesondere kann der erste Unterkontaktanschlußbereich 15b mit einem zugeordneten Kontaktbereich der Leiterplatte 1 verlötet sein. Dadurch wird in der Kontaktierungsposition der Leiterplatte 7 eine elektrische Verbindung zwischen der Trägerleiterplatte 1 und der Leiterplatte 7 mittels des Verbinders 3 hergestellt. Dabei stellt jedes erste Unterkontaktelement 15 eine elektrische Verbindung zwischen einem Kontaktierungsbereich der Trägerleiterplatte 1, welcher mit dem ersten Unterkontaktanschlußbereich 15b kontaktiert, und einem zugeordneten ersten elektrischen Leiter der Leiterplatte 7 her, welcher mit dem ersten Unterkontaktierungsbereich 15a kontaktiert.

Entsprechend umfaßt jedes zweite Unterkontaktelement 17 einen zweiten Unterkontaktanschlußbereich 17b, der ausgelegt ist, mit der Trägerleiterplatte 1 zu kontaktieren, insbesondere damit verlötet zu sein, sowie einen zweiten Unterkontaktierungsbereich 17a, der ausgelegt ist, mit einem zugeordneten zweiten elektrischen Leiter der Leiterplatte 7 elektrisch zu kontaktieren. Dementsprechend kann mittels des zweiten Unterkontaktelements 17 eine elektrische Verbindung zwischen einem Kontaktierungsbereich der Trägerleiterplatte 1 und einem zugeordneten elektrischen Leiter der Leiterplatte 7 ausgebildet werden.

Die ersten und zweiten Unterkontaktelemente 15, 17 sind insbesondere dazu ausgelegt, hochfrequente elektrische Signale zwischen der Trägerleiterplatte 1 und der Leiterplatte 7 zu übertragen. Insbesondere kann die Leiterplatte 7 einen Prozessor, ein oder mehrere Speichermodule und weitere Elektronik aufweisen, die das Verarbeiten von Signalen und Daten auf der Leiterplatte 7 ermöglichen. Die dazu notwendigen Informationen können über weitere Vorrichtungen bereitgestellt werden, beispielsweise über Netzwerke oder Speichermedien, welche mit der Trägerleiterplatte 1 kontaktieren. Entsprechend müssen die elektrischen Signale, welche der Kommunikation zwischen den Netzwerken bzw. den Speichermedien und einem Prozessor auf der Leiterplatte 7 dienen, zwischen der Leiterplatte 7 und der Trägerleiterplatte 1 übertragen werden. Die dazu notwendigen elektrischen Signale können Frequenzen von einigen wenigen MHz bis zu einigen GHz aufweisen. Insbesondere für hochfrequente Signale mit Frequenzen von größer als 1 GHz sind die durch den Verbinder 3 bedingten Dämpfungen, Verzerrungen und Laufzeitverzögerungen entscheidend für das Funktionieren der Kommunikation zwischen der Leiterplatte 7 und der Trägerleiterplatte 1. Daher ist es eine Aufgabe der Erfindung, den Verbinder 3 derart auszugestalten, daß eine möglichst verzerrungsarme Signalübertragung zwischen der Trägerleiterplatte 1 und der Leiterplatte 7, welche mittels des Verbinders 3 elektrisch miteinander verbunden sind, zu ermöglichen. Es versteht sich jedoch, daß neben den hochfrequenten Signalen zur Kommunikation zwischen einzelnen Bauteilen von Leiterplatte 7 und Trägerleiterplatte 1 der Verbinder 3 auch zur Stromversorgung der Leiterplatte 7 verwendet werden kann.

Im Gegensatz zu bekannten MXM Verbindern, welche der Qseven Spezifikation entsprechen, weist der Verbinder 3 erste Unterkontaktelemente 15 auf, welche von den zweiten Unterkontaktelementen 17 verschieden sind, wohingegen die Unterkontaktelemente des bekannten MXM Verbinders zueinander identisch sind. Wie in Fig. 1 gezeigt, ist die Vielzahl von ersten Unterkontaktelementen 15 alternierend bzw. abwechselnd mit der Vielzahl von zweiten Unterkontaktelementen 17 entlang der Längsrichtung L angeordnet. Mit anderen Worten ist zwischen zwei ersten Unterkontaktelementen 15 jeweils ein einziges zweites Unterkontaktelement 17 angeordnet. Entsprechend ist zwischen zwei zweiten Unterkontaktelementen 17 genau ein erstes Unterkontaktelement 15 angeordnet. Bevorzugt umfaßt der Verbinder 3 gemäß der Qseven Spezifikation insgesamt eine Anzahl von 115 ersten und zweiten Unterkontaktelementen 15, 17. Mit anderen Worten kann der Verbinder 3 57 oder 58 erste Unterkontaktelemente 15 und dementsprechend 58 oder 57 zweite Unterkontaktelemente 17 aufweisen.

Die ersten und zweiten Unterkontaktelemente 15, 17 des Verbinders 3 sind jeweils ausgelegt, zugeordnete elektrische Leiter der Leiterplatte 7 zu kontaktieren, welche sich auf einer gemeinsamen Unterseite der Leiterplatte 7 befinden. In der Regel weist die Leiterplatte 7 jedoch auch elektrische Leiter an einer Oberseite auf, welche der Unterseite gegenüberliegt. Um diese elektrischen Leiter auf der Oberseite der Leiterplatte 7 zu kontaktieren, weist der Verbinder 3 bevorzugt eine Vielzahl von ersten Oberkontaktelementen 19 und eine Vielzahl von zweiten Oberkontaktelementen 21 auf. Jedes erste Oberkontaktelement 19 ist ausgelegt, in einem ersten Oberkontaktierungsbereich 19a mit einem zugeordneten dritten elektrischen Leiter auf der Oberseite der Leiterplatte 7 elektrisch zu kontaktieren. Entsprechend ist jedes zweite Oberkontaktelement 21 ausgelegt, in einem zweiten Oberkontaktierungsbereich 21 a mit einem zugeordneten vierten elektrischen Leiter auf der Oberseite der Leiterplatte 7 elektrisch zu kontaktieren.

Entsprechend zu den Unterkontaktelementen 15, 17 sind die Oberkontaktelemente 19, 21 ebenfalls aus einem elektrisch leitfähigen, rückstellfähigen Material ausgebildet. Insbesondere sind die Oberkontaktelemente 19, 21 aus dem gleichen Material ausgebildet wie die Unterkontaktelemente 15, 17. Jedes erste Oberkontaktelement 19 umfaßt einen ersten Oberkontaktanschlußbereich 19b, welcher ausgelegt ist, mit einem entsprechenden Kontaktierungsbereich der Trägerleiterplatte 1 elektrisch zu kontaktieren bzw. damit verbunden zu sein. Entsprechend umfaßt jedes zweite Oberkontaktelement 21 einen zweiten Oberkontaktanschlußbereich 21 b, welcher ebenfalls ausgelegt ist, mit einem entsprechenden Kontaktierungsbereich der Trägerleiterplatte 1 elektrisch zu kontaktieren bzw. damit verbunden zu sein, beispielsweise durch Verlöten.

Die elektrischen Leiter, welche auf der Oberseite der Leiterplatte 7 angeordnet sind, werden somit mittels des Verbinders 3 mit zugeordneten Kontaktierungsbereichen der Trägerleiterplatte 1 elektrisch verbunden. Bezüglich der Art und des Zwecks der elektrischen Verbindung gilt das zu den Unterkontaktelementen Gesagte analog.

Die Vielzahl von ersten Oberkontaktelementen 19 ist alternierend bzw. abwechselnd mit der Vielzahl von zweiten Oberkontaktelementen 21 entlang der Linksrichtung L angeordnet. Dabei sind die ersten und zweiten Oberkontaktelemente 19, 21 derart angeordnet, daß die Oberkontaktierungsbereiche 19a, 21 a im Bereich des Einführöffnungsabschnitts 11 angeordnet sind bzw. in diesen hineinragen. Entsprechend sind die Unterkontaktierungsbereiche 15a, 17a im Bereich des Einführöffnungsabschnitts 11 angeordnet bzw. ragen zumindest bereichsweise in diesen hinein. Besonders bevorzugt ist jedem ersten Unterkontaktierungsbereich 15a ein zugeordneter erster Oberkontaktierungsbereich 19a zugeordnet, welcher entlang der Höhenrichtung H von dem ersten Unterkontaktierungsbereich 15a beabstandet angeordnet ist.

Mit anderen Worten können ein erster Unterkontaktierungsbereich 15a und ein zugeordneter erster Oberkontaktierungsbereich 19a gegenüberliegend im Einführöffnungsabschnitt 11 angeordnet sein. Entsprechend können ein zweiter Unterkontaktierungsbereich 17b und ein zugeordneter zweiter Oberkontaktierungsbereich 21 b entlang der Höhenrichtung H voneinander beabstandet angeordnet sein, so daß die beiden zugeordneten Bereiche einander gegenüberliegend im Einführöffnungsabschnitt 11 angeordnet sind. Der Abstand zwischen einem Unterkontaktierungsbereich 15a, 17a und einem zugeordneten Oberkontaktierungsbereich 19a, 21a entlang der Höhenrichtung H beträgt vorzugsweise etwa 1 mm bis etwa 2 mm. Insbesondere etwa $1{,}2 \pm 0{,}1$ mm. Es versteht sich jedoch, daß der Abstand zwischen den Unterkontaktierungsbereichen 15a, 17a und den Oberkontaktierungsbereichen 19a, 21a in Abhängigkeit von der einzuführenden Leiterplatte 7 gewählt werden kann.

Die ersten und zweiten Unterkontaktelemente 15, 17 und die ersten und zweiten Oberkontaktelemente 19, 21 sind durch das Gehäuse 13 des Verbinders 3 zumindest bereichsweise aufgenommen bzw. durch das Gehäuse bzw. mit dem Gehäuse befestigt. Insbesonder umfaßt das erste Unterkontaktelement 15 zumindest einen ersten Unterkontaktelementbefestigungsbereich 15c, welcher ausgelegt ist, in einem komplementären Bereich des Gehäuses 13 aufgenommen zu sein, um das erste Unterkontaktelement zu befestigen. Entsprechend umfaßt das zweite Unterkontaktelement 17 zumindest einen zweiten Unterkontaktelementbefestigungsbereich 17c, das erste Oberkontaktelement 19 zumindest einen ersten Oberkontaktelementbefestigungsbereich 19c und das zweite Oberkontaktelement 21 zumindest einen zweiten Oberkontaktelementbefestigungsbereich 21 c. Diese Befestigungsbereiche 15, 17c, 19c, 21c können als Vorsprünge ausgebildet sein, welche in komplementäre Ausnahmen bzw. Löcher im Gehäuse 13 aufgenommen werden können, um mit dem Gehäuse 13 in Reibschluß oder Formschluß zu gelangen, wodurch die Befestigung erfolgt.

Weiter umfaßt das Gehäuse 13 bevorzugt zumindest eine Befestigungsvorrichtung 23a, 23b, mit welcher der Verbinder 3 an der Trägerleiterplatte 1 befestigt werden kann. Insbesondere kann der Verbinder 3 zwei Befestigungsvorrichtungen 23a, 23b aufweisen, welche entlang der Längsrichtung L voneinander beabstandet an gegenüberliegenden Enden des Verbinders 3 angeordnet sind. Bevorzugt umfaßt jeder der Befestigungsvorrichtungen 23a, 23a eine durchgängige Öffnung, durch welche eine Schraube geführt werden kann, um den Verbinder 3 mittels der Schraube (nicht gezeigt) mit der Trägerleiterplatte 1 mechanisch zu verbinden.

Wie in Fig. 2b gezeigt, kann die Einführrichtung E mit der Höhenrichtung H einen Winkel von etwa 60 bis 90 Grad einschließen. Mit anderen Worten kann die Leiterplatte 7 um einen Winkel von etwa 30 Grad geschwenkt werden, wenn die Leiterplatte 7 bereits zumindest bereichsweise in den Einführöffnungsabschnitt 11 eingeführt ist. Insbesondere kann ein Verschwenken der Leiterplatte 7 um eine Achse, welche im Bereich des Einführöffnungsabschnitts 11 angeordnet ist und - entlang der Längsrichtung L orientiert ist, notwendig sein, um die Leiterplatte 7 nach dem Einführen

entlang der Einführrrichtung E in die Kontaktierungsposition zu überführen.

Die Fig. 3 zeigt einen Schnitt entlang der von der Einführrichtung E und der Höhenrichtung H aufgespannten Ebene durch den Verbinder 3. Der Verbinder 3 umfaßt zumindest ein erstes Unterkontaktelement 15 und zumindest ein zweites Unterkontaktelement 17. Weiter umfaßt der Verbinder zumindest ein erstes Oberkontaktelement 19 und zumindest ein zweites Oberkontaktelement 21. Die Figur 4 zeigt eine Seitenansicht und die Figur 5 eine perspektivische Ansicht der in der Figur 3 gezeigten Ober- und Unterkontaktelemente 15, 17, 19, 21. Das erste Unterkontaktelement 15 ist dabei verschieden von dem zweiten Unterkontaktelement 17. Wie insbesondere in der Figur 4 zu sehen ist, sind das erste und zweite Unterkontaktelement 15, 17 nicht zueinander kongruent. Mit anderen Worten können das erste Unterkontaktelement 15 und das zweite Unterkontaktelement 17 nicht derart verlagert bzw. gedreht werden, daß beide Unterkontaktelemente zur Deckung gelangen. Vielmehr ist das erste Unterkontaktelement 15 lediglich im Unterkontaktierungsbereich 15a und im Unterkontaktanschlußbereich 15b identisch zu dem zweiten Unterkontaktierungsbereich 17a und dem zweiten Unterkontaktanschlußbereich 17b des zweiten Unterkontaktelements 17 ausgebildet bzw. geformt. Mit anderen Worten sind das erste Unterkontaktelement 15 und das zweite Unterkontaktelement 17 derart geformt und innerhalb des Verbinders 3 angeordnet, daß bei betriebsgemäßem Gebrauch des Verbinders 3 die Teile des ersten und zweiten Unterkontaktelements 15, 17, welche stromdurchflossen sind, bezogen auf die Längsrichtung L versetzt voneinander angeordnet sind. Mit anderen Worten sind das erste Unterkontaktelement 15 und das zweite zugeordnete Unterkontaktelement 17 lediglich bereichsweise entlang der Längsrichtung L benachbart zueinander angeordnet. Das heißt, daß Bereiche des ersten Unterkontaktelements 15 keine entsprechenden zugeordneten Bereiche des zweiten Unterkontaktelements 17 haben, welche exakt entlang der Längsrichtung L beabstandet zu dem ersten Kontaktelement 15 angeordnet sind. Insbesondere für hochfrequente Signale, beispielsweise für Signale mit Frequenzen größer als 1 GHz, führen parallel zueinander verlaufende elektrische Leiter und die dadurch bedingte Kapazität zu störenden Leitungsverlusten bzw. Signalstörungen. Durch die in den Figuren 3 bis 5 gezeigte Ausbildung bzw. Anordnung der ersten und zweiten Unterkontaktelemente 15, 17 wird die effektive Kapazität eines Paares eines ersten und zweiten Unterkontaktelements 15, 17 vorteilhafterweise verringert. Lediglich in Bereichen, in denen sich das erste Unterkontaktelement 15 mit dem zweiten Unterkontaktelement 17 innerhalb der von der Einführrichtung E und der Höhenrichtung H aufgespannten Ebene überlappt, wird eine nennenswerte Kapazität zwischen dem ersten und zweiten Unterkontaktelement 15, 17 erzeugt.

Das erste Unterkontaktelement 15 ist von dem zweiten Unterkontaktelement 17 entlang der Längsrichtung L beabstandet voneinander in dem Verbinder 3 angeordnet. In dem Zwischenraum zwischen dem ersten und zweiten Unterkontaktelement 17, 19 kann zumindest bereichsweise ein Dielektrikum angeordnet sein. Im einfachsten Fall besteht das Dielektrikum aus Luft. Bevorzugt kann neben Luft als Dielektrikum noch ein weiteres Dielektrikum in Form eines festen, elektrischen nicht leitenden Materials im Zwischenraum zwischen dem ersten und zweiten Unterkontaktelement 15, 17 zumindest bereichsweise angeordnet sein. Insbesondere kann das Dielektrikum aus einem Material bestehen, welches identisch zu dem Material des Gehäuses 13 ist. Insbesondere kann das Dielektrikum integral mit dem Gehäuse 13 ausgebildet sein. Aufgrund der Tatsache, daß die Lichtgeschwindigkeit innerhalb eines Dielektrikums geringer ist als die Vakuumlichtgeschwindigkeit, kann das Anordnen eines Dielektrikums angrenzend an einen elektrischen Leiter dazu führen, daß hochfrequente Signale in Bereichen des elektrischen Leiters, der von dem Dielektrikum umgeben ist, langsamer propagieren als in Bereichen, die nicht von einem Dielektrikum umgeben sind. Aufgrund des Skin-Effekts wird die mögliche Zeitverzögerung bzw. Phasenverzögerung eines elektrischen Signals innerhalb eines von dem Dielektrikum umgebenen elektrischen Leiters umso größer je größer die Frequenz des elektrischen Signal ist. Vorteilhafterweise kann das Anordnen eines Dielektrikums angrenzend an einen elektrischen Leiter dazu benutzt werden, die Laufzeit eines elektrischen Signals durch den elektrischen Leiter mittels des Dielektrikums zu beeinflussen. Wie in Figuren 3 bis 5 zu sehen ist, weist das erste Unterkontaktelement 15 eine von dem zweiten Unterkontaktelement 17 verschiedene Form und damit für ein elektrisches Signal auch eine verschiedene effektive Weglänge auf. Dadurch wird ein elektrisches Signal, welches an dem ersten Unterkontaktanschlußbereich 15b des ersten Unterkontaktelements 15 anliegt, zu einem anderen Zeitpunkt bzw. mit einer anderen Phase an dem Unterkontaktierungsbereich 15a ankommen als ein identisches Signal, welches am zweiten Unterkontaktanschlußbereich 17b anliegt und durch das zweite Unterkontaktelement 17 zum zweiten Unterkontaktierungsbereich 17a propagiert, sofern beide Unterkontaktelemente vom gleichen Dielektrikum, beispielsweise Luft, umgeben sind. Jedoch ist eine Zeitverzögerung bzw. Phasenverschiebung zwischen zwei zu übertragenden Signalen bei der Kommunikation zwischen der Trägerleiterplatte 1 und der Leiterplatte 7 unerwünscht. Deshalb ist ein Dielektrikum 25 bereichsweise zwischen dem ersten Kontaktelement 15 und dem zweiten Unterkontaktelement 17 angeordnet, wobei das Dielektrikum derart angepaßt ist, um eine Phasendifferenz bzw. eine Signallaufzeitdifferenz zwischen dem ersten Unterkontaktelement 15 und dem zweiten Unterkontaktelement 17 auszugleichen.

Mittels numerischer Modellierung kann berechnet werden, wie ein transientes elektrisches Signal durch das erste Unterkontaktelement 15 und das zweite Unterkontaktelement 17 geleitet wird, wobei auch die Interaktion zwischen den benachbarten ersten und zweiten Unterkontaktelementen 15, 17 berechnet werden kann. Insbesondere können Reflexionen des Signals aufgrund von Impedanzkontrasten innerhalb des ersten Unterkontaktelements 15, des zweiten Unterkontaktelements 17 bzw. des aus dem ersten und zweiten Unterkontaktelement 15, 17 gebildeten Doppelleiters berechnet werden. Dadurch kann beispielsweise die gesamtwirkende Impedanz des Verbinders 3 zwischen der Trägerleiterplatte 1 und der Leiterplatte 7 ermittelt werden. Weiter können die Phasenverschiebungen bzw. Signalverzögerungen zwischen dem ersten Unterkontaktelement 15 und dem zweiten Unterkontaktelement 17 quantifiziert werden. Die von dem Verbinder 3 einzuhaltende Impedanz ist in der Regel durch eine Spezifikation, wie beispielsweise der Spezifikation Qseven 1.20, vorgegeben. Ob die vorgegebene Impedanz durch einen Verbinder 3 eingehalten wird, kann schon beim Design des Verbinders 3 mittels der numerischen Berechnungen ermittelt werden. Durch ein iteratives Optimierungsverfahren können die Form des ersten Unterkontaktelements 15 sowie des zweiten Unterkontaktelements 17 und die Art und Anordnung des Dielektrikums zwischen den beiden Unterkontaktelementen 15, 17 im Hinblick auf den einzuhaltenden vorbestimmten Impedanzwert und eine Minimierung der Phasenverschiebung bzw. der Laufzeitverzögerung eines Signals durch das erste und zweite Unterkontaktelement 15, 17 optimiert werden.

Dies ist insbesondere vorteilhaft für Signale mit Frequenzen größer als etwa 1 GHz. Entsprechend können vorteilhafterweise mittels des Verbinders 3 höhere Frequenzen mit geringen Verzerrungen zwischen der Trägerleiterplatte 1 und der Leiterplatte 7 übertragen werden als mit bekannten Verbindern.

Die **Figur 6** zeigt eine Anordnung einer Leiterplatte 7 welche mittels des Verbinders 3 mit der Trägerleiterplatte 1 elektrisch verbunden ist. Der Verbinder 3 kann vorteilhafterweise dazu benutzt werden, die Leiterplatte 7 auch mechanisch mit der Trägerleiterplatte 1 zu verbinden. Mit anderen Worten wird die Leiterplatte 7 durch den Verbinder 3 auch unter Einfluß von äußeren Kräften, wie beispielsweise Vibrationen, sicher in der Position relativ zur Trägerleiterplatte 1 gehalten. Das dem Verbinder 3 gegenüberliegende freie Ende der Leiterplatte 7 wird herkömmlicherweise mittels Abstandsbolzen mit der Trägerleiterplatte 1 verschraubt.

Erfindungsgemäß wird neben dem Verbinder 3, welcher ein erfindungsgemäßer Verbinder 3 sein kann oder ein aus dem Stand der Technik bekannter Verbinder, insbesondere ein MXM Verbinder gemäß der Qseven Spezifikation, ein Hilfsverbinder 5 verwendet, welcher derart an der Trägerleiterplatte 1 angeordnet ist, daß die Leiterplatte 7 mit einem flachen Endbereich 7a entlang der Einführrichtung E in den Verbinder 3 eingeführt werden kann, wobei der dem Endbereich 7a gegenüberliegende Endbereich 7b mit dem Hilfsverbinder 5 elektrisch kontaktieren kann.

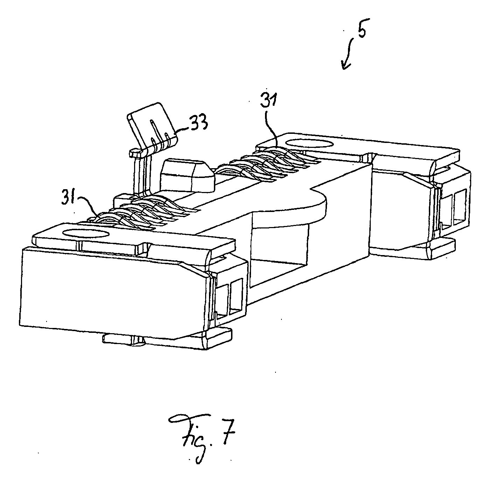

Figur 7 zeigt eine bevorzugte Ausführungsform des Hilfsverbinders. Insbesondere kann der Hilfsverbinder 5 zumindest einen elektrischen Kontakt 31 aufweisen, welcher ausgelegt ist, einen zugeordneten elektrischen Leiter der Leiterplate 7 elektrisch zu kontaktieren. Mittels des Hilfsverbinders 5 kann die Leiterplatte 7 insbesondere mit elektrischem Strom versorgt werden. Insbesondere kann der zumindest eine elektrische Kontakt 31 ausgelegt sein, einen Strom von etwa einem bis etwa 10 A, bevorzugt von etwa einem bis etwa 5 A, bei einer Spannung von etwa 5 bis etwa 12 V zu leiten. Vorteilhafterweise kann durch die Stromversorgung der Leiterplatte 7 über den Hilfsverbinder 5 eine Stromversorgung der Leiterplatte über den Verbinder 3 entfallen. Weiter können die elektrischen Kontakte 31 des Hilfsverbinders 5 stärker ausgelegt sein als die Unterkontaktelemente bzw. Oberkontaktelemente des Verbinders 3, da diese nicht an die geometrische Spezifikation des Verbinders 3 gebunden sind. Dadurch ist es vorteilhafterweise möglich, die Leiterplatte 7 mit mehr Strom zu versorgen als dies über den Verbinder 3 möglich wäre, wodurch vorteilhafterweise Leistungselektronik oder energieintensive Bauteile wie Prozessoren oder Grafikprozessoren auf der Leiterplatte 7 betrieben werden können.

Weiter bevorzugt umfaßt der Hilfsverbinder 5 eine Verriegelungsvorrichtung 33, welche ausgelegt ist mit einer Kante der Leiterplatte 7 zu verriegeln. Insbesondere kann die Leiterplatte 7 nach dem Einführen in den Einführöffnungsabschnitt 11 des Verbinders 3 durch Verschwenken der Leiterplatte 7 um eine Achse, welche entlang der Längsrichtung L orientiert ist, sowohl in die Kontaktierungsposition bezüglich des Verbinders 3 überführt werden als auch in eine Verriegelungsposition bezüglich des Hilfsverbinders 5 gelangen. Besonders bevorzugt ist die Verriegelungsvorrichtung 33 als Rastelement ausgebildet, welches rückstellfähig ist. Mit anderen Worten kann das Rastelement 33 während des Verschwenkens der Leiterplatte 7 durch die Leiterplatte 7 mit einer Betätigungskraft beaufschlagt werden, so daß das Rastelement 33 verlagert wird bis die Leiterplatte 7 in die Verriegelungsposition gelangt. In der Verriegelungsposition kann sich das Rastelement 33 aufgrund seiner Rückstellfähigkeit in seine ursprüngliche Position zurückverlagern, wobei die Leiterplatte 7 zumindest bereichsweise hintergriffen und verriegelt wird. Dadurch kann die Leiterplatte 7 vorteilhafterweise lediglich durch die Verwendung des Verbinders 3 in Kombination mit dem Hilfsverbinder 5 auf der Trägerleiterplatte 1 befestigt werden. Die Verwendung von Abstandsbolzen und weiteren Befestigungselementen ist vorteilhafterweise nicht notwendig. Jedoch können zusätzliche Befestigungselemente vorgesehen sein, um die Leiterplatte 7 lösbar oder unlösbar mit der Trägerleiterplatte 1 zu verbinden.

Bezugszeichenliste

| 1 | Trägerleiterplatte |
| 3 | Verbinder |
| 5 | Hilfsverbinder |

| 7 | Leiterplatte |
|---|---|
| 7a, 7b | Endbereich der Leiterplatte 7 |
| 11 | Einführöffnungsabschnitt |
| 13 | Gehäuse des Verbinders 3 |
| 15 | erstes Unterkontaktelement |
| 15a | erster Unterkontaktierungsbereich |
| 15b | erster Unterkontaktanschlußbereich |
| 15c | erster Unterkontaktelementbefestigungsbereich |
| 17 | zweites Unterkontaktelement |
| 17a | zweiter Unterkontaktierungsbereich |
| 17b | zweiter Unterkontaktanschlußbereich |
| 17c | zweiter Unterkontaktelementbefestigungsbereich |
| 19 | erstes Oberkontaktelement |
| 19a | erster Oberkontaktierungsbereich |
| 19b | erster Oberkontaktanschlußbereich |
| 19c | erster Oberkontaktelementbefestigungsbereich |
| 21 | zweites Oberkontaktelement |
| 21a | zweiter Oberkontaktierungsbereich |
| 21b | zweiter Oberkontaktanschlußbereich |
| 21c | zweiter Oberkontaktelementbefestigungsbereich |
| 23a,b | Befestigungseinrichtung |
| 25 | Dielektrikum |
| 31 | elektrischer Kontakt des Hilfsverbinders 5 |
| 33 | Verriegelungsvorrichtung des Hilfsverbinders 5 |
| E | Einführrichtung |
| H | Höhenrichtung |
| L | Längsrichtung |

**Patentansprüche**

1. Verbinder (3) zur Aufnahme zumindest eines flachen Endbereichs (7a) einer Leiterplatte (7) oder eines flachen Endbereichs eines Kabels umfassend:

- einen Einführöffnungsabschnitt (11), welcher derart ausgelegt ist, daß der flache Endbereich (7a) entlang einer Einführrichtung (E) in ein Inneres des Verbinders (3) einführbar ist;
- zumindest ein erstes Unterkontaktelement (15), welches ausgelegt ist, mit zumindest einem zugeordneten ersten elektrischen Leiter auf einer Unterseite des flachen Endbereichs (7a) elektrisch zu kontaktieren und
- zumindest ein zweites Unterkontaktelement (17), welches ausgelegt ist, mit zumindest einem zugeordneten zweiten elektrischen Leiter auf der Unterseite des flachen Endbereichs (7a) elektrisch zu kontaktieren,

wobei das erste Unterkontaktelement (15) von dem zweiten Unterkontaktelement (17) entlang einer Längsrichtung (L), die rechtwinklig zur Einführrichtung (E) orientiert ist, beabstandet angeordnet ist,
wobei das erste Unterkontaktelement (15) von dem zweiten Unterkontaktelement (17) verschieden ist und
wobei die Einführrichtung (E) und eine Höhenrichtung (H), die senkrecht zur Einführrichtung (E) und senkrecht zur Längsrichtung (L) orientiert ist, eine Schnittebene (E-H) definieren, so daß das erste Unterkontaktelement (15) innerhalb der Schnittebene (E-H) nicht kongruent zu dem zweiten Unterkontaktelement (17) ist,
wobei der Verbinder (3) weiter umfaßt:

- zumindest ein erstes Oberkontaktelement (19), welches ausgelegt ist, mit zumindest einem zugeordneten dritten elektrischen Leiter auf einer Oberseite des flachen Endbereichs (7a) elektrisch zu kontaktieren und
- zumindest ein zweites Oberkontaktelement (21), welches ausgelegt ist, mit zumindest einem zugeordneten vierten elektrischen Leiter auf der Oberseite des flachen Endbereichs (7a) elektrisch zu kontaktieren, wobei das erste Oberkontaktelement (19) von dem zweiten Oberkontaktelement (21) entlang der Längsrichtung (L) beabstandet angeordnet ist,

wobei das erste Oberkontaktelement (19) von dem zweiten Oberkontaktelement (21) verschieden ist, wobei das erste Oberkontaktelement (19) innerhalb der Schnittebene (E-H) nicht kongruent zu dem zweiten Oberkontaktelement (21) ist, **dadurch gekennzeichnet daß**
das erste (19) und zweite (21) Oberkontaktelement nicht kongruent zu jedem der ersten (15) und zweiten (17) Unterkontaktelemente ist.

2. Verbinder (3) gemäß Anspruch 1, wobei das Kongruenzmaß $K_U$ zwischen dem ersten Unterkontaktelement (15) und dem zweiten Unterkontaktelement (17) kleiner als 0,9 ist und/oder
wobei das Kongruenzmaß $K_O$ zwischen dem ersten Oberkontaktelement (19) und dem zweiten Oberkontaktelement (21) kleiner als 0,9 ist.

3. Verbinder (3) gemäß einem der vorigen Ansprüche, wobei eine Vielzahl von ersten Unterkontaktelementen (15) alternierend mit einer Vielzahl von zweiten Unterkontaktelementen (17) entlang der Längsrichtung (L) angeordnet sind und/oder
wobei eine Vielzahl von ersten Oberkontaktelementen (19) alternierend mit einer Vielzahl von zweiten Oberkontaktelementen (21) entlang der Längsrichtung (L) angeordnet sind.

4. Verbinder (3) gemäß einem der vorigen Ansprüche, wobei die geometrische Gestalt der ersten und zweiten Unterkontaktelemente derart auslegt ist, daß zwischen einem des zumindest einen ersten Unterkontaktelements (15) und einem dazu benachbarten zweiten Unterkontaktelement (17) eine vorbestimmte elektrische Kapazität oder Impedanz ausgebildet ist.

5. Verbinder (3) gemäß einem der vorigen Ansprüche,
wobei die geometrische Gestalt der ersten und zweiten Unterkontaktelemente derart auslegt ist, daß zwischen einem ersten Unterkontaktierungsbereich (15a) des ersten Unterkontaktelements (15) und einem ersten Unterkontaktanschlußbereich (15b) des ersten Unterkontaktelements (15) eine elektrische Signallaufzeit $T_1(f)$ auftritt und zwischen einem zweiten Unterkontaktierungsbereich (17a) des zweiten Unterkontaktelements (17) und einem zweiten Unterkontaktanschlußbereich (17b) des zweiten Unterkontaktelements (17) eine elektrische Signallaufzeit $T_2(f)$ auftritt,
wobei die beiden Signallaufzeiten im wesentlichen gleich sind.

6. Verbinder (3) gemäß einem der Ansprüche 4 und 5,
wobei zwischen dem ersten Unterkontaktelement (15) und dem zweiten Unterkontaktelement (17) zumindest bereichsweise ein Dielektrikum derart angeordnet ist, daß zwischen dem ersten Unterkontaktierungsbereich (15a) des ersten Unterkontaktelements (15) und dem ersten Unterkontaktanschlußbereich (15b) des ersten Unterkontaktelements (15) eine vorbestimmte elektrische Signallaufzeit $T_1(f)$ auftritt
und/oder
zwischen dem zweiten Unterkontaktierungsbereich (17a) des zweiten Unterkontaktelements (17) und dem zweiten Unterkontaktanschlußbereich (17b) des zweiten Unterkontaktelements (17) eine vorbestimmte elektrische Signallaufzeit $T_2(f)$ und/oder zwischen dem ersten und zweiten Unterkontaktierungsbereich (15a, 17a) und dem ersten und zweiten Unterkontaktanschlußbereich (15b, 17b) eine vorbestimmte elektrische Impedanz $Z(f)$ auftritt.

7. Verbinder (3) gemäß einem der vorigen Ansprüche, wobei die geometrische Gestalt der ersten und zweiten Oberkontaktelemente derart auslegt ist, daß zwischen einem des zumindest einen ersten Oberkontaktelements (19) und einem dazu benachbarten zweiten Oberkontaktelement (21) eine vorbestimmte elektrische Kapazität oder Impedanz ausgebildet ist.

8. Verbinder (3) gemäß einem der vorigen Ansprüche,
wobei die geometrische Gestalt der ersten und zweiten Oberkontaktelemente (19, 21) derart auslegt ist, daß zwischen einem ersten Oberkontaktierungsbereich (19a) des ersten Oberkontaktelements (19) und einem ersten Oberkontaktanschlußbereich (19b) des ersten Oberkontaktelements (19) eine elektrische Signallaufzeit $T_3(f)$ auftritt und zwischen einem zweiten Oberkontaktierungsbereich (21 a) des zweiten Oberkontaktelements (21) und einem zweiten Oberkontaktanschlußbereich (21 b) des zweiten Oberkontaktelements (21) eine elektrische Signallaufzeit $T_4(f)$ auftritt,
wobei die beiden Signallaufzeiten im wesentlichen gleich sind.

9. Verbinder (3) gemäß einem der Ansprüche 7 und 8,
wobei zwischen dem ersten Oberkontaktelement (19) und dem zweiten Oberkontaktelement (21) zumindest bereichsweise ein Dielektrikum derart angeordnet ist, daß zwischen dem ersten Oberkontaktierungsbereich (19a) und dem ersten Oberkontaktanschlußbereich (19b) eine vorbestimmte elektrische Signallaufzeit $T_3(f)$ auftritt

und/oder
zwischen dem zweiten Oberkontaktierungsbereich (21 a) und dem zweiten Oberkontaktanschlußbereich (21 b) eine vorbestimmte elektrische Signallaufzeit $T_4(f)$ und/oder zwischen dem ersten und zweiten Oberkontaktierungsbereich (19a, 21a) und dem ersten und zweiten Oberkontaktanschlußbereich (19b, 21b) eine vorbestimmte elektrische Impedanz Z(f) auftritt.

10. Kontaktsystem umfassend:

    - eine Leiterplatte (7);
    - eine Trägerleiterplatte (1) mit:
    - einem Verbinder (3) nach einem der vorigen Ansprüche, in welchem ein erster Endbereich (7a) der Leiterplatte (7) zumindest bereichsweise aufgenommen ist, wobei die Leiterplatte (7) mittels des Verbinders mit der Trägerleiterplatte (1) elektrisch und mechanisch verbunden ist,
    - einem Hilfsverbinder (5) mit einer Verriegelungseinrichtung, mit welcher ein zweiter Endbereich (7b) der Leiterplatte (7) verriegelt ist, wobei die Leiterplatte (7) mittels des Hilfsverbinders (5) mit der Trägerleiterplatte (1) elektrisch und mechanisch verbunden ist.

**Claims**

1. A connector (3) for receiving at least a flat end portion (7a) of a printed circuit board (7) or a flat end portion of a cable, comprising:

    - an introduction section (11) being designed in a way that the flat end portion (7a) is insertable into an interior of the connector (3) along an insertion direction (E);
    - at least one first bottom contact element (15) being designed to electrically contact at least one assigned first electrical conductor on a bottom face of the flat end portion (7a), and
    - at least one second bottom contact element (17) being designed to electrically contact at least one assigned second electrical conductor on a bottom face of the flat end portion (7a),

the first bottom contact element (15) being located spaced apart from the second bottom contact element (17) along a longitudinal direction (L) oriented orthogonal to the insertion direction (E),
the first bottom contact element (15) being different from the second bottom contact element (17), and
the insertion direction (E) and a direction of the height (H) oriented orthogonal to the insertion direction (E) and orthogonal to the longitudinal direction defining a sectional plane (E-H) such that the first bottom contact element (15) is not congruent with the second bottom contact element (17) within the sectional plane (E-H),
wherein the connector (3) further comprises:

    - at least one first top contact element (19) being designed to electrically contact at least one assigned third electrical conductor on a top face of the flat end portion (7a), and
    - at least one second top contact element (21) being designed to electrically contact at least one assigned fourth electrical conductor on a top face of the flat end portion (7a),

the first top contact element (19) being located spaced apart from the second top contact element (21) along the longitudinal direction (L),
the first top contact element (19) being different from the second top contact element (21), wherein the first top contact element (19) is not congruent with the second top contact element (21) within the sectional plane (E-H),
**characterized in that**
the first (19) and second (21) top contact element are not congruent with either of the first (15) and second (17) bottom contact elements.

2. The connector (3) according to claim 1, wherein the degree of congruence Ku between the first bottom contact element (15) and the second bottom contact element (17) is less than 0.9 and/or
wherein the degree of congruence Ko between the first top contact element (19) and the second top contact element (21) is less than 0.9.

3. The connector (3) according to any of the preceding claims, wherein a plurality of first bottom contact elements (15) is arranged in an alternating manner with a plurality of second bottom contact elements (17) along the longitudinal direction (L) and/or
wherein a plurality of first top contact elements (19) is arranged in an alternating manner with a plurality of second top contact elements (21) along the longitudinal direction (L).

4. The connector (3) according to any of the preceding claims, wherein the geometrical shape of the first and second bottom contact elements is designed such that a predetermined electrical capacitance or impedance is formed between one of the at least one first bottom contact element (15) and an adjacent second bottom contact element (17).

5. The connector (3) according to any of the preceding claims,
wherein the geometrical shape of the first and second bottom contact elements is designed such that an electrical signal propagation time $T_1(f)$ occurs between a first bottom contact area (15a) of the first bottom contact element (15) and a first bottom contact connection area (15b) of the first bottom contact element (15) and an electrical signal propagation time $T_2(f)$ occurs between a second bottom contact area (17a) of the second bottom contact element (17) and a second bottom contact connection area (17b) of the second bottom contact element (17), wherein both signal propagation times are essentially the same.

6. The connector (3) according to claim 4 or 5,
wherein at least in some areas a dielectric is arranged between the first bottom contact element (15) and the second bottom contact element (17) such that a predetermined electrical signal propagation time $T_1(f)$ occurs between the first bottom contact area (15a) of the first bottom contact element (15) and the first bottom contact connection area (15b) of the first bottom contact element (15),
and/or
a predetermined electrical signal propagation time $T_2(f)$ occurs between the second bottom contact area (17a) of the second bottom contact element (17) and the second bottom contact connection area (17b) of the second bottom contact element (17), and/or a predetermined electrical impedance $Z(f)$ is formed between the first and second bottom contact area (15a, 17a) and the first and second bottom contact connection area (15b, 17b).

7. The connector (3) according to any of the preceding claims, wherein the geometrical shape of the first and second top contact elements is designed such that a predetermined electrical capacitance or impedance is formed between one of the at least one first top contact element (19) and an adjacent second top contact element (21).

8. The connector (3) according to any of the preceding claims,
wherein the geometrical shape of the first and second top contact elements (19, 21) is designed such that an electrical signal propagation time $T_3(f)$ occurs between a first top contact area (19a) of the first top contact element (19) and a first top contact connection area (19b) of the first top contact element (19) and an electrical signal propagation time $T_4(f)$ occurs between a second top contact area (21a) of the second top contact element (21) and a second top contact connection area (21 b) of the second top contact element (21),
wherein both signal propagation times are essentially the same.

9. The connector (3) according to claim 7 or 8,
wherein at least in some areas a dielectric is arranged between the first top contact element (19) and the second top contact element (21) such that a predetermined electrical signal propagation time $T_3(f)$ occurs between the first top contact area (19a) and the first top contact connection area (19b),
and/or
a predetermined electrical signal propagation time $T_4(f)$ occurs between the second top contact area (21 a) and the second top connection area (21 b), and/or a predetermined electrical impedance $Z(f)$ is formed between the first and second top contact area (19a, 21 a) and the first and second top contact connection area (19b, 21b).

10. A contacting system comprising:

- a printed circuit board (7);
- a motherboard (1) including:
- a connector (3) according to any of the preceding claims, receiving a first end portion (7a) of the printed circuit board (7) at least in some areas, wherein the printed circuit board (7) is electrically and mechanically connected to the motherboard (1) by means of the connector,
- an auxiliary connector (5) including a locking means locking a second end portion (7b) of the printed circuit board (7), wherein the printed circuit board (7) is electrically and mechanically connected to the motherboard (1) by means of the auxiliary connector (5).

**Revendications**

1. Connecteur (3) pour la réception ou encore le logement d'au moins une zone terminale (7a) plate d'une carte (7) de circuit imprimé ou d'une zone terminale plate d'un câble, comprenant :

   - une portion d'ouverture d'introduction (11), qui est agencée de manière que la zone terminale (7a) plate soit insérable le long d'une direction d'introduction (E) à l'intérieur du connecteur (3) ;
   - au moins un premier élément de contact inférieur (15), qui est agencé de manière à établir un contact électrique avec au moins un premier conducteur électrique correspondant sur un côté inférieur de la zone terminale (7a) plate et
   - au moins un deuxième élément de contact inférieur (17), qui est agencé de manière à établir un contact électrique avec au moins un deuxième conducteur électrique correspondant sur le côté inférieur de la zone terminale (7a) plate,

   sachant que le premier élément de contact inférieur (15) est disposé de manière écartée du deuxième élément de contact inférieur (17) le long d'une direction longitudinale (L), orientée de manière perpendiculaire par rapport à la direction d'introduction (E),
   sachant que le premier élément de contact inférieur (15) diffère du deuxième élément de contact inférieur (17) et sachant que la direction d'introduction (E) et une direction d'élévation (H), qui est orientée perpendiculairement par rapport à la direction d'introduction (E) et perpendiculairement par rapport à la direction longitudinale (L), définissent un plan d'intersection (E-H), de façon que le premier élément de contact inférieur (15) à l'intérieur du plan d'intersection (E-H) n'est pas congruent avec le deuxième élément de contact inférieur (17),
   sachant que le connecteur (3) comprend en outre :

   - au moins un premier élément de contact supérieur (19), qui est agencé de manière à établir un contact électrique avec au moins un troisième conducteur électrique correspondant d'un côté supérieur de la zone terminale (7a) plate et
   - au moins un deuxième élément de contact supérieur (21), qui est agencé de manière à établir un contact électrique avec au moins un quatrième conducteur électrique correspondant sur le côté supérieur de la zone terminale (7a) plate,

   sachant que le premier élément de contact supérieur (19) est disposé de manière écartée du deuxième élément de contact supérieur (21) le long de la direction longitudinale (L),
   sachant que le premier élément de contact supérieur (19) diffère du deuxième élément de contact supérieur (21),
   sachant que le premier élément de contact supérieur (19) à l'intérieur du plan d'intersection (E-H) n'est pas congruent avec le deuxième élément de contact supérieur (21),
   **caractérisé en ce que**
   le premier (19) et le deuxième (21) élément de contact supérieur n'est pas congruent avec chacun des éléments de contact inférieur un (15) et deux (17).

2. Connecteur (3) d'après la revendication 1, sachant que le degré de congruence $K_U$ entre le premier élément de contact inférieur (15) et le deuxième élément de contact inférieur (17) est inférieur à 0,9 et/ou sachant que le degré de congruence $K_O$ entre le premier élément de contact supérieur (19) et le deuxième élément de contact supérieur (21) est inférieur à 0,9.

3. Connecteur (3) d'après une des revendications précédentes, sachant qu'une pluralité de premiers éléments de contact inférieur (15) en alternance avec une pluralité de deuxièmes éléments de contact inférieur (17) sont disposés le long de la direction longitudinale (L) et/ou
   sachant qu'une pluralité de premiers éléments de contact supérieur (19) en alternance avec une pluralité de deuxièmes éléments de contact supérieur (21) sont disposés le long de la direction longitudinale (L).

4. Connecteur (3) d'après une des revendications précédentes, sachant que la forme géométrique des premiers et des deuxièmes éléments de contact inférieur est agencée de manière qu'entre un parmi le ou les premiers éléments de contact inférieur (15) et un deuxième élément de contact inférieur (17) adjacent à celui-ci est formée une capacité ou une impédance électrique prédéterminée.

5. Connecteur (3) d'après une des revendications précédentes,
   sachant que la forme géométrique des premiers et des deuxièmes éléments de contact inférieur est agencée de manière qu'entre une première zone d'établissement de contact inférieur (15a) du premier élément de contact inférieur (15) et une première zone de raccordement de contact inférieur (15b) du premier élément de contact inférieur (15) se manifeste un temps de propagation de signal électrique $T_1(f)$ et qu'entre la deuxième zone d'établissement de contact inférieur (17a) du deuxième élément de contact inférieur (17) et une deuxième zone de raccordement de contact inférieur (17b) du deuxième élément de contact inférieur (17) se manifeste un temps de propagation de signal électrique $T_2(f)$,
sachant que les deux temps de propagation de signal sont essentiellement identiques.

6. Connecteur (3) d'après une des revendications 4 et 5,
sachant qu'entre le premier élément de contact inférieur (15) et le deuxième élément de contact inférieur (17) est agencé au moins dans certaines zones un diélectrique de manière qu'entre la première zone d'établissement de contact inférieur (15a) du premier élément de contact inférieur (15) et la première zone de raccordement de contact inférieur (15b) du premier élément de contact inférieur (15) se manifeste un temps de propagation de signal électrique $T_1(f)$ prédéterminé
et/ou
qu'entre la deuxième zone d'établissement de contact inférieur (17a) du deuxième élément de contact inférieur (17) et la deuxième zone de raccordement de contact inférieur (17b) du deuxième élément de contact inférieur (17) se manifeste un temps de propagation de signal électrique $T_2(f)$ prédéterminé et/ou qu'entre la première et deuxième zone d'établissement de contact inférieur (15a, 17a) et la première et deuxième zone de raccordement de contact inférieur (15b, 17b) se manifeste une impédance électrique $Z(f)$ prédéterminée.

7. Connecteur (3) d'après une des revendications précédentes,
sachant que la forme géométrique des premiers et des deuxièmes éléments de contact supérieur est agencée de manière qu'entre un du ou des premiers éléments de contact supérieur (19) et un deuxième élément de contact supérieur (21) adjacent à celui-ci est formée une capacité ou une impédance électrique prédéterminée.

8. Connecteur (3) d'après une des revendications précédentes,
sachant que la forme géométrique des premiers et des deuxièmes éléments de contact supérieur (19, 21) est agencée de manière qu'entre une première zone d'établissement de contact supérieur (19a) du premier élément de contact supérieur (19) et une première zone de raccordement de contact supérieur (19b) du premier élément de contact supérieur (19) se manifeste un temps de propagation de signal électrique $T_3(f)$ et qu'entre une deuxième zone d'établissement de contact supérieur (21 a) du deuxième élément de contact supérieur (21) et une deuxième zone de raccordement de contact supérieur (21 b) du deuxième élément de contact supérieur (21) se manifeste un temps de propagation de signal électrique $T_4(f)$,
sachant que les deux temps de propagation de signal sont essentiellement identiques.

9. Connecteur (3) d'après une des revendications 7 et 8,
sachant qu'entre le premier élément de contact supérieur (19) et le deuxième élément de contact supérieur (21) est agencé au moins dans certaines zones un diélectrique de manière qu'entre la première zone d'établissement de contact supérieur (19a) et la première zone de raccordement de contact supérieur (19b) se manifeste un temps de propagation de signal électrique $T_3(f)$ prédéterminé et/ou
qu'entre la deuxième zone d'établissement de contact supérieur (21 a) et la deuxième zone de raccordement de contact supérieur (21 b) se manifeste un temps de propagation de signal électrique $T_4(f)$ prédéterminé et/ou qu'entre la première et deuxième zone d'établissement de contact supérieur (19a, 21a) et la première et deuxième zone de raccordement de contact supérieur (19b, 21 b) se manifeste une impédance électrique $Z(f)$ prédéterminée.

10. Système de contact, comprenant :

- une carte (7) de circuit imprimé ;
- une carte-mère (*Trägerleiterplatte*) (1) avec :
- un connecteur (3) d'après une des revendications précédentes, dans lequel une première zone terminale (7a) de la carte (7) de circuit imprimé est reçue au moins sectoriellement, sachant que la carte (7) de circuit imprimé est raccordée électriquement et mécaniquement avec la carte mère (1) au moyen du connecteur,
- un connecteur auxiliaire (5) avec un dispositif de verrouillage, par lequel une deuxième zone terminale (7b) de la carte (7) de circuit imprimé est verrouillée, sachant que la carte (7) est raccordée électriquement et mécaniquement avec la carte mère (1) au moyen du connecteur auxiliaire (5).

Fig. 1

EP 2 862 240 B1

Fig. 2a

Fig. 2b

3

13

H

E

21
19
25
19a
15a
19c
25
15
15c
19c
21c
15b
21b
19b

Fig. 3

*Fig. 4*

21

19

H

17a

21a

19a

15a

17

15

E

L

21c

19c

21b

19b

17c

15c

17b

15b

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0193375 A2